(19) Europäisches Patentamt

European Patent Office

Office européen des brevets

(11) **EP 0 634 069 B1**

(12) **FASCICULE DE BREVET EUROPEEN**

(45) Date de publication et mention
de la délivrance du brevet:
**13.01.1999 Bulletin 1999/02**

(51) Int Cl.⁶: **H04L 12/56**, H04L 12/40,
H04Q 7/20, H04B 7/26

(21) Numéro de dépôt: 93907909.1

(22) Date de dépôt: 30.03.1993

(86) Numéro de dépôt international:
**PCT/FR93/00317**

(87) Numéro de publication internationale:
**WO 93/20636 (14.10.1993 Gazette 1993/25)**

(54) **INSTALLATION DE TRANSMISSION DE DONNEES, DU TYPE RESEAU RADIO, ET PROCEDE CORRESPONDANT**

ANLAGE UND VERFAHREN ZUR UEBERTRAGUNG VON DATEN IN EINEM FUNKNETZ

RADIO NETWORK TYPE DATA TRANSMISSION INSTALLATION AND METHOD

(84) Etats contractants désignés:
**DE ES GB IT NL SE**

(30) Priorité: **02.04.1992 FR 9204032**

(43) Date de publication de la demande:
**18.01.1995 Bulletin 1995/03**

(60) Demande divisionnaire: **98102755.0 / 0 862 298**
**98102754.3 / 0 849 914**

(73) Titulaire: **INRIA INSTITUT NATIONAL DE RECHERCHE EN INFORMATIQUE ET EN AUTOMATIQUE**
**Rocquencourt F-78153 Le Chesnay (FR)**

(72) Inventeurs:
• **JACQUET, Philippe**
**F-78530 Buc (FR)**
• **MUHLETHALER, Paul**
**F-78600 Maison-Laffite (FR)**

(74) Mandataire: **Plaçais, Jean-Yves et al**
**Cabinet Netter,**
**40, rue Vignon**
**75009 Paris (FR)**

(56) Documents cités:
**WO-A-86/04755**     **WO-A-88/04497**
**WO-A-91/05416**     **US-A- 4 665 519**
**US-A- 5 040 175**

## Description

L'invention concerne les réseaux informatiques qui permettent l'échange d'informations ou "données" entre différents postes.

Un tel réseau comprend classiquement un milieu de transmission, généralement un câble électrique ou à fibres optiques. En différents endroits de ce câble sont raccordés des stations ou postes, ce raccordement s'effectuant à travers une "interface-réseau".

Il est nécessaire que les postes se comprennent, malgré leur multiplicité. Dans certains réseaux informatiques, on fixe à cet effet une règle (multiplexage, jeton) selon laquelle au plus l'un des postes peut émettre sur le milieu de communication à un moment donné. Une autre technique autorise un "accès aléatoire" au réseau, c'est à dire que plusieurs postes peuvent émettre en même temps. Une conséquence de cet accès multiple est que des "collisions" peuvent se produire, et il faudra alors les résoudre.

Le réseau ETHERNET (marque déposée), régi par la norme dite IEEE 802.3, est du type à accès aléatoire. Le protocole de gestion du réseau est du type à accès multiple sensible à la porteuse avec détection de collision, ou CSMA/CD (Carrier Sense Multiple Access with Collision Detection). La mise en oeuvre d'un tel réseau, mais avec pour milieu de communication l'éther, c'est-à-dire avec transmission par ondes radio, pose différents problèmes reconnus (US-A-5040175, qui propose une solution assez complexe). La présente invention vient aider à résoudre ces problèmes de manière plus simple et plus efficace.

Un premier but de l'invention est d'améliorer la détection ou reconnaissance de collision, s'agissant d'un réseau radio.

L'invention a également pour but d'assurer que l'ensemble des stations ou postes concernés vont disposer en commun d'une information de collision, ce qui est nécessaire pour la cohérence des opérations de résolution de collision qui suivront.

L'invention a aussi pour but d'assurer le maintien convenable de synchronisations fréquentielles entre les différents postes connectés par radio.

L'invention vise encore à tenir compte des particularités des transmissions par radio, qui font que plusieurs trajets existent, sur un ensemble de trois postes non alignés, mais que des obstacles peuvent interdire certains de ces trajets.

L'invention a en complément pour but de permettre une transmission indirecte d'informations entre deux postes, via un ou plusieurs postes intermédiaires.

L'installation de transmission de données ici proposée est du type comprenant au moins deux postes de traitement de données (le mot "traitement" étant pris à son sens le plus élémentaire). Chaque poste est muni d'une interface-réseau, capables de transmettre des messages sur requête, et de recueillir des messages reçus. Ceci comprend un dispositif de gestion d'émission-réception comportant un détecteur de collision et un moyen de résolution de collision, consécutivement à une condition de collision reconnue. Une des fonctions essentielles de ce dispositif de gestion est de donner des ordres confirmatifs d'émission ou de réception à l'interface-réseau.

Selon un premier aspect de l'invention, chacun des postes comporte un dispositif d'émission-réception radio (en principe pluridirectionnel, c'est à dire intéressant plusieurs directions, mais non nécessairement omnidirectionnel), avec :

.   un émetteur-récepteur opérant sur un canal dit central, pour la transmission des messages à échanger, et commandé conformément auxdits ordres confirmatifs, et
.   un émetteur-récepteur auxiliaire opérant sur au moins un canal latéral, possédant un état normal, et agencé pour modifier son état d'émission réception en réponse à une collision détectée.

En réponse au moins au début d'un ordre confirmatif d'émission, l'émetteur-récepteur auxiliaire, capable de commutation émission-réception rapide, est agencé pour opérer en émission-réception rapidement alternée, selon un motif (de préférence sensiblement aléatoire) choisi pour être propre à ce dispositif d'émission-réception.

En émission, une collision est alors reconnue par le détecteur de collisions si un signal de niveau supérieur à un premier seuil de niveau est reçu durant une partie substantielle d'au moins un silence de ce canal latéral, manifestant l'émission concomitante d'un autre poste sur ce canal latéral.

A côté de cela, l'interface-réseau est agencée pour reconnaître une collision en réception par violation d'un critère prédéfini, associé à des codes de détection et/ou de correction d'erreurs.

Sont ainsi définies des informations préliminaires de collision, en émission et/ou en réception, en chaque poste ou station. Il faut encore assurer que les différents postes vont disposer de la même information sur la collision.

A cet effet, selon un aspect important de l'invention, lorsqu'il a reconnu une collision, un poste procède à une "émission sur collision" ou "émission de signalement de collision", et qui consiste à émettre sur un canal latéral un signal de caractéristiques temporelles et fréquentielles déterminées, par exemple une fréquence pure de durée minimale.

Dans les autres cas, il écoute le canal latéral pour déterminer si un autre poste signale une collision.

Si, au départ, le poste était lui-même "actif" (c'est à dire en début ou "tentative" d'émission), il peut procéder à une "écoute active" consistant à accompagner pendant la durée prédéterminée un éventuel signal représentatif de collision qu'il recevrait. De cette façon, tout émetteur "actif" propage l'information de "collision" vers l'ensemble des stations qui sont à portée de réception.

Selon un autre aspect de l'invention, il est prévu un second canal latéral sur lequel tout poste qui reçoit un signal de gain suffisant pour pouvoir être traité (signal "démodulable") va émettre un signal d'occupation, qui sera interprété par tout autre poste (à portée radio) comme une interdiction d'émission.

Selon un autre aspect de l'invention, en l'absence de trafic naturel suffisant, le dispositif de gestion est agencé pour forcer l'émission de messages artificiels, afin de permettre le maintien d'un calage mutuel de fréquences pilotes des différents postes, comme on le décrira plus loin. Cette décision d'émission de messages artificiels obéit avantageusement à des critères sensiblement aléatoires.

Les messages artificiels peuvent être utilisés à des fins de service (c'est-à-dire d'une façon utile, mais non pour les données à transmettre proprement dites).

Ils peuvent d'une part servir pour échanger des informations utiles à la compréhension des messages, dans le cas où ceux-ci sont transcodés. Ils peuvent d'autre part servir à transmettre des informations ou tables définissant des modes de relais entre différents postes, lorsqu'il s'agit d'une transmission entre postes éloignés nécessitant des relais intermédiaires.

D'autres caractéristiques et avantages de l'invention apparaîtront à l'examen de la description détaillée ci-après, et des dessins annexés, sur lesquels :

-    la figure 1 est un schéma très simplifié d'un réseau informatique classique où le milieu de transmission est filaire;

-    la figure 2 est un schéma très simplifié illustrant quatre stations interconnectées par une transmission radio;

-    la figure 3 est le schéma de principe de l'ensemble de l'interface-réseau, pour un poste selon l'invention;

-    la figure 3A est un détail partiel de la figure 3;

-    les figures 4A à 4D illustrent le format des trames;

-    la figure 5 est un schéma fonctionnel d'un mécanisme applicable à la détection de collisions;

-    la figure 6 est un schéma fonctionnel plus détaillé d'une partie de la figure 5, tandis que la figure 6A est un schéma électrique équivalent, correspondant à la figure 6 et les figures 6B et 6C en montrent une variante;

-    les figures 7, 8 et 9 sont d'autres schémas fonctionnels plus détaillés, relatifs à des parties du mécanisme de la figure 5;

-    la figure 10 est un schéma électrique des opérations effectuées au niveau du second canal latéral;

-    la figure 11A est un schéma électrique équivalent des opérations de l'automate détecteur de collisions, tandis que la figure 11B est un schéma électrique équivalent des autres parties du dispositif de gestion d'émission/réception d'un poste;

-    les figures 12 et 13 sont des mécanismes permettant, par la transmission de messages artificiels, d'effectuer la synchronisation fréquentielle entre les différents postes.

Les dessins annexés sont, pour l'essentiel, de caractère certain. En conséquence, ils font partie intégrante de la description et pourront non seulement servir à compléter celle-ci, mais aussi contribuer à la définition de l'invention le cas échéant.

Par ailleurs, le Demandeur a déposé le 2 avril 1992 une autre demande de brevet n° 92 04 033 (FR-A-2 689 658), à laquelle correspond la demande EP 93-907790 du 30 mars 1993, intitulée "Dispositif de transmission de données pour réseau à accès aléatoire, avec résolution de collision perfectionnée, et procédé correspondant". Du fait des relations techniques existant avec la présente Demande, le Demandeur renvoie les lecteurs à la description et aux dessins de cette autre Demande pour faciliter la compréhension de sa description et en tirer des informations complémentaires, en tant que de besoin.

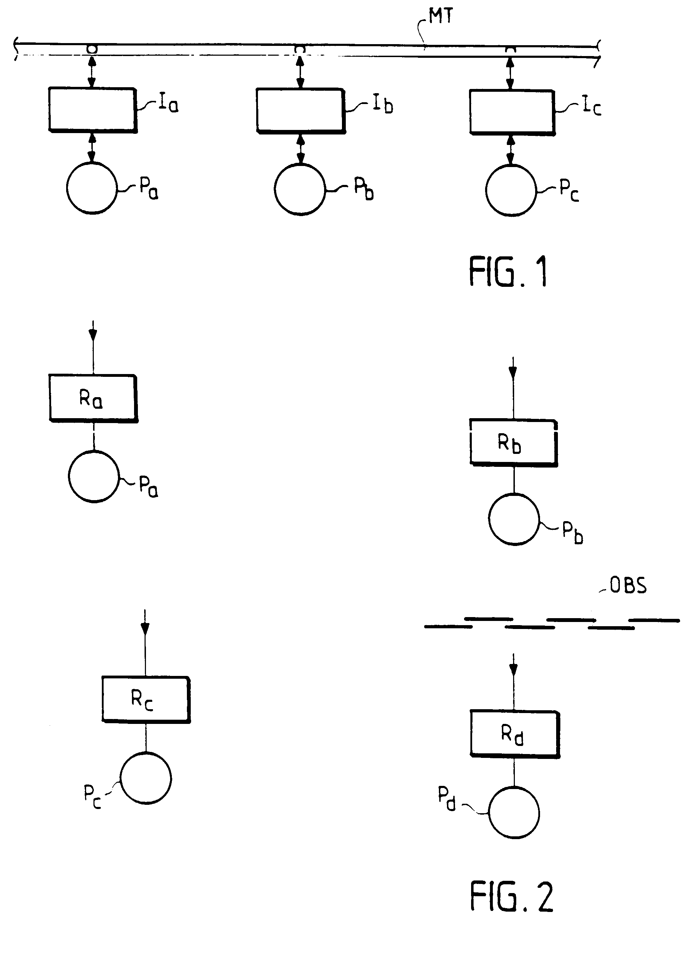

Sur la figure 1, un milieu de transmission MT est relié à des interfaces-réseaux Ia à Ic, respectivement connectés à des postes Pa à Pc. C'est là la structure classique d'un réseau informatique de transmission de données, auquel peut s'appliquer le protocole CSMA/CD déjà évoqué, conformément à la norme IEEE 802.3.

Le spécialiste sait que les modèles de définition de telles interfaces sont définies "en couches" (norme ISO), à chacune desquelles est affectée une fonction précise. Ce découpage en couches fonctionnelles permet d'assurer la compatibilité d'organes du réseau de sources différentes, lorsqu'ils se trouvent interconnectés. Il sera fait référence dans la suite à cette notion de couche. On distinguera d'ailleurs les couches du protocole proprement dites, et les couches supérieures du protocole.

Les postes tels que Pa sont des postes de traitement de données (le mot traitement est utilisé ici au sens le plus élémentaire, ce traitement pouvant être très simple). Tous les traitements effectués dans le poste sont extérieurs à la transmission de données proprement dite. Mais il pourra exister dans le poste des opérations spécifiques tenant compte spécifiquement de la nature et de certaines conditions applicables à la transmission de données. Ce sont là les couches supérieures du protocole.

Les couches du protocole lui-même vont au contraire régir la transmission de données en ses conditions de base, d'une façon qui permette d'en assurer la sécurité.

Sur la figure 2, les postes ou stations Pa à Pd sont maintenant reliées à des dispositifs radio Ra à Rd, munis d'antennes. Dans l'exemple simplifié illustré, toutes les stations peuvent échanger directement des données, sauf les stations Rb et Rd, entre lesquelles existe un obstacle OBS.

Ce que l'on appelle ici interface-réseau, dans une acception plus large que pour les réseaux informatiques à câble, c'est tout ce qui se trouve entre le poste proprement dit et la ou les antennes qu'il comporte.

Le mot "message" désigne ici un ensemble de données à transmettre, de taille quelconque. Le mot "trame" ou "paquet" désigne l'unité élémentaire de transmission de données, c'est à dire le bloc de données que l'on peut transmettre ensemble.

L'une des particularités de la présente invention est de faire en sorte que lorsqu'un poste désire émettre une trame, ce poste soit le seul à le faire dans son domaine de portée radio.

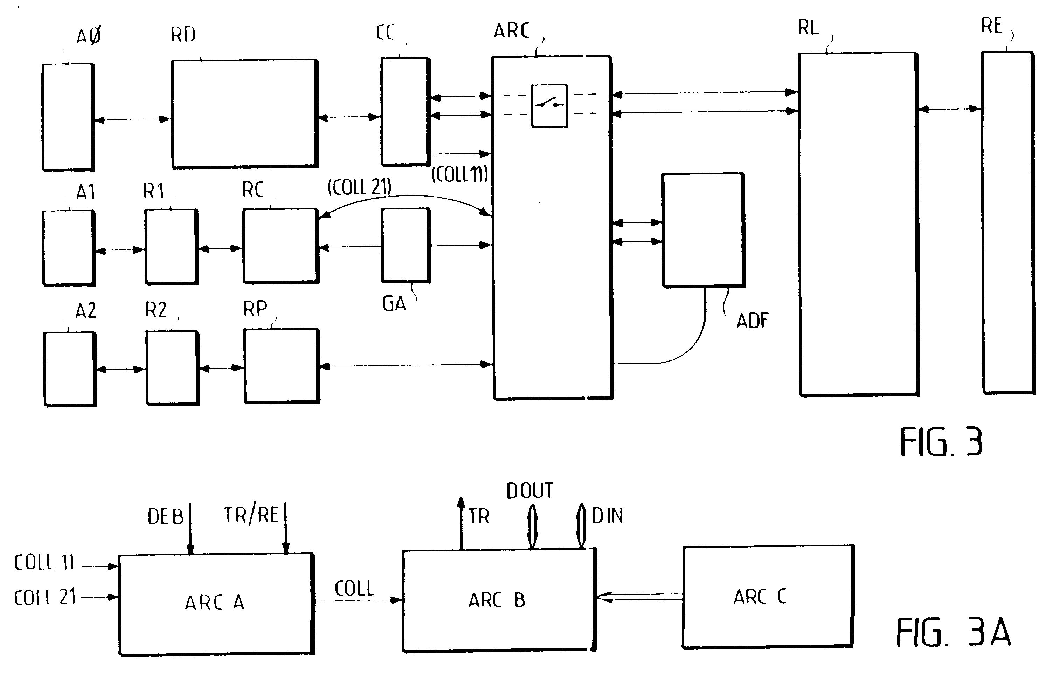

Il est maintenant fait référence à la figure 3, qui illustre la structure générale d'une interface-réseau pour un poste.

A droite, le bloc RE désigne le raccordement normalisé à la norme IEEE 802, qui permet la liaison avec une sortie réseau d'un ordinateur. Ce raccord est par exemple réalisé avec le circuit intégré i82586 vendu par INTEL Corporation.

A sa gauche, le bloc RL est un "routeur local" dont le rôle sera précisé plus loin. Il a pour fonction d'établir des messages à transmettre, avec des requêtes de transmission, ainsi que de recueillir les messages convenablement reçus, et éventuellement de les re-diriger.

Encore à gauche apparaît un bloc ARC, qui est l'unité de gestion d'émission-réception, en fonction notamment des collisions.

Il lui est adjoint un bloc ADF, qui va permettre de corriger des dérives en fréquence, par l'émission de messages artificiels, lorsque cela est nécessaire.

A gauche du bloc ARC, on trouve en haut un canal principal, qui s'établit entre une antenne d'émission-réception A0, un émetteur-récepteur radio modulé, pour la transmission de données, noté RD, et un circuit CC qui a pour fonction, à l'émission, d'agrémenter le message de codes correcteurs, et, à la réception, de vérifier la correction de ces codes pour détecter d'éventuelles erreurs à l'intérieur d'un message (reçu par ailleurs normalement, c'est-à-dire sans collision).

A gauche et au milieu se trouve un premier canal latéral, muni d'une antenne d'émission-réception AI, d'un émetteur-récepteur R1 à commutation émission/réception rapide, et d'un circuit RC pour la détection radio des collisions.

Il s'y trouve aussi un bloc GA qui opère en tant que générateur de codes pseudo-aléatoires, de tels codes étant utilisés à différentes fins selon l'invention, d'une part par le circuit RC, d'autre part par le bloc ARC déjà cité. Les blocs RC et ARC sont directement interconnectés.

Enfin, à gauche et en bas, est représenté un second canal latéral avec son antenne A2, son récepteur R2, et un circuit RP, qui permet la détection radio de "porteuses cachées".

Le découpage fonctionnel auquel il a été procédé sur la figure 3 ne sera pas toujours respecté dans la suite, dans le but de faciliter la compréhension.

Ainsi, le bloc ARC peut être décomposé en trois blocs ARCA, ARCB et ARCC, comme illustré sur la figure 3A. Le bloc ARCA est chargé de diriger la détection de collisions, et d'en exploiter le résultat. Le bloc ARCB est utilisé pour la résolution de collisions, et l'établissement d'ordres confirmatifs d'émission ou de réception de données. Il sera incorporé à ce bloc ARCB un mécanisme de résolution de collisions qui peut être de tout type connu. Enfin, le bloc ARCC va se charger, en liaison avec le bloc ADF, d'assurer la transmission des messages artificiels.

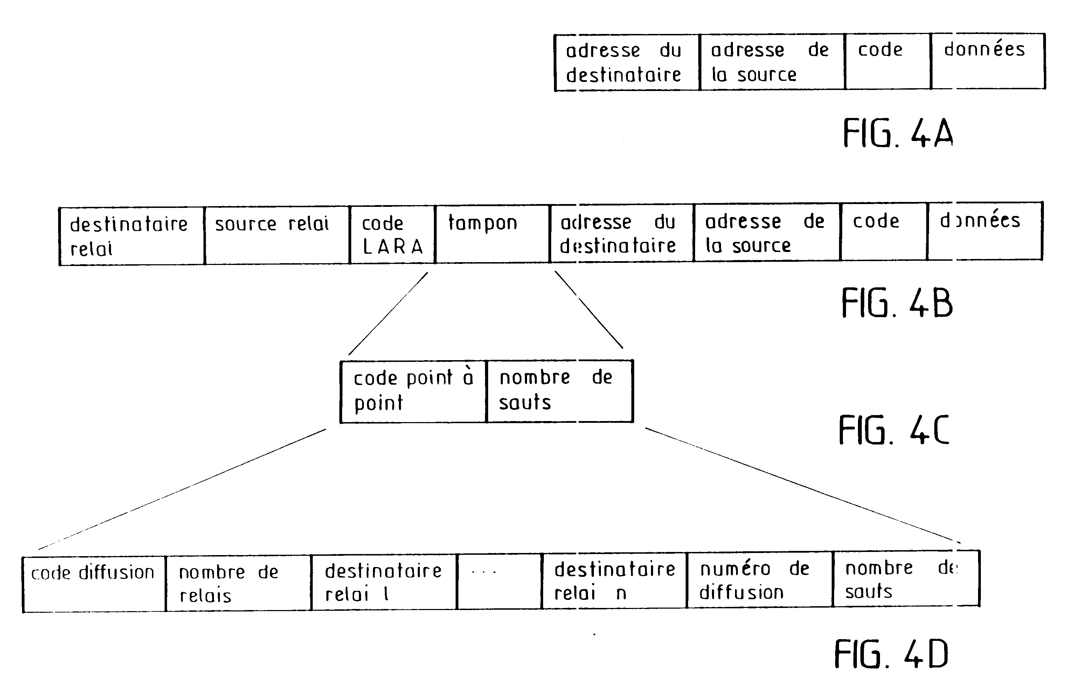

Il est maintenant fait référence à la figure 4.

La figure 4A illustre le format classique d'un message ETHERNET conforme à la norme IEEE 802.3.

La présente invention prévoit que ce message est complété, si on le souhaite, par les indications supplémentaires qui apparaissent à droite sur la figure 4B. Elles comprennent d'une part une indication de destinataire relais et de source relais, un code dit code LARA (cette dénomination "LARA" étant attribuée au protocole nouveau selon la présente invention), et une zone de tampon qui peut contenir des informations complémentaires.

Lorsque plusieurs relais sont prévus, la zone de tampon contient, comme indique sur la figure 4C, tout d'abord un code indiquant qu'il s'agit d'une transmission point à point, c'est-à-dire d'un seul poste émetteur à un seul poste destinataire, d'autre part une zone indiquant le nombre de sauts déjà effectués par la trame dans les différents relais qu'elle a subis depuis le poste émetteur initial. Ce tampon est remis à jour à chaque saut ou relais de la trame.

A l'inverse, un message peut être émis par un poste à destination de plusieurs postes, ce qu'on appellera une "diffusion". Dans ce cas, comme illustré sur la figure 4D, la zone tampon est multipliée, pour comprendre un code indiquant qu'il s'agit d'une diffusion, le nombre de relais, ainsi que les adresses-destinataire de différents relais 1 à n, un numéro de message de diffusion, et le nombre de sauts effectués par la trame dans ses relais précédents.

Ce qui vient d'être décrit est la structure d'une "trame" de messages. Dans un exemple simple, chaque trame est constituée de deux parties, à savoir l'en-tête, et le corps du paquet. L'en-tête contient au minimum l'adresse du ou des destinataires, et l'adresse de l'expéditeur, ainsi que quelques informations spécifiques au sujet du trafic (par exemple nécessité ou non d'un accusé de réception). Le corps du paquet contient les données à transmettre (fichier, accusé de réception), ainsi que les signaux de fin de paquets.

Ces trames ou paquets sont acheminés un par un à partir du bloc RE de la figure 3. Le bloc RL va traiter ces paquets, essentiellement dans le cas où un destinataire ne serait pas dans la zone de portée radio de l'émetteur; il procède alors à une modification de l'entête par le rajout de l'adresse d'une station intermédiaire, comme illustré sur la figure 4B. Les paquets sont ensuite pris en charge par le bloc ARC, qui décide des émissions, et les interrompt en cas de collision détectée. Le codeur CC et le dispositif RD se chargent de l'émission effective des trames dans l'éther. Lorsqu'une trame a été correctement transmise sans collision, un signal est transmis jusqu'au bloc RE, pour permettre de prendre le prochain paquet.

A la réception, le fonctionnement se produit en inverse. Le bloc CC va vérifier la correction des paquets reçus ; de rpéférence, les paquets avec erreur seront simplement détruits.

Le bloc RL détermine si le message est arrivé à sa destination, ou s'il est en cours de correspondance ou de relais. Un message arrivé à destination est transmis au bloc RE, tandis qu'un message à relayer voit éventuellement son en-tête modifiée compte tenu du relais, pour retourner vers le bloc ARC en vue d'une réémission.

La norme internationale ISO - IEEE 802 prévoit un découpage en couches des fonctions de communication. Les fonctions situées depuis les antennes jusqu'au bloc ADF inclus constituent une adaptation à la transmission par radio des fonctions classiquement dénommées couche "Medium Access Control" ou MAC. Conformément à la présente invention, une nouvelle couche est introduite ensuite, qui correspond au bloc RL, et que l'on peut appeler couche "membership and routing" ou MR. Au niveau du bloc RE, on retrouve la couche d'interface ETHERNET classique.

Il sera maintenant question de la couche dite MAC, qui va être décrite en détail.

Tout d'abord, un procédé précis de transmission de données doit être appliqué au niveau du bloc RD. Il s'agit en effet de transformer une séquence numérique binaire en un signal électromagnétique propre à la propagation radio via l'antenne, et réciproquement, ce qui est généralement plus délicat.

Le but visé est d'assurer un maximum de protection électromagnétique à la séquence numérique qui doit transiter entre un émetteur et un récepteur; il faut notamment lutter le plus efficacement possible contre les phénomènes de parasitage ou de trajets multiples. Par contre, il est inutile de lutter contre le brouillage par les émissions éventuelles des autres postes du réseau, car c'est là le critère qui va permettre d'établir l'existence d'une collision, et ensuite de résoudre celle-ci.

Ainsi, le bloc RD peut travailler par étalement de spectre avec un code unique pour toutes les stations d'un même réseau, ce code unique pouvant être un code de pseudo-aléatoire commun à toutes les stations, et détecté par filtre adapté à la réception. Ce n'est là qu'un exemple.

On notera d'ailleurs qu'il est nécessaire d'assurer une synchronisation convenable sur le plan fréquentiel entre les différents postes intervenant. L'homme du métier sait assurer cette synchronisation en cas de trafic suffisant. Lorsque cette condition n'est pas vérifiée, la dérive entre les différents oscillateurs-pilotes peut devenir telle que le synchronisme ne peut plus être rattrapé très rapidement. Il sera proposé plus loin une solution à ce problème.

De façon générale, une réception radio sera considérée comme démodulable si son gain à la réception est supérieur ou égal à une valeur de seuil $e_d$. Si le gain est inférieur, le signal reçu est considéré comme "reçu avec erreurs". Avantageusement, on définit une valeur $E_d$, laquelle correspond à une réception "à proximité immédiate" (Ceci sert notamment au routage, décrit plus loin). Cette définition d'un seuil commun à toutes les stations ou postes suppose que la puissance de réception est la même pour tous, ce qui est admis ici de façon générale.

Le circuit CC a pour fonction, en mode émission, de transformer les trames à la norme IEEE 802 en des séquences binaires plus résistantes aux erreurs de transmission, grâce notamment à l'emploi de codes correcteurs d'erreurs (par exemple un entrelacement, associé à l'usage d'un code convolutionnel).

En mode réception, le composant restitue la trame initiale en corrigeant les éventuelles erreurs de transmission sur la séquence binaire reçue du dispositif de réception radio des données (lorsque celui-ci dispose d'une réception démodulable).

De plus, il détecte les éventuelles erreurs résiduelles à un traitement de la trame reconstituée, et signale ces erreurs. Il peut en résulter un état de "trame reçue avec erreurs".

De préférence, on utilise deux codages détecteurs et correcteurs d'erreurs:

- l'un pour les erreurs "dispersées" (codage de VITERBI),

- l'autre, traitant les erreurs par blocs (codage de REED-SOLOMON, avec entrelacement).

Ceci suppose la mise en oeuvre desdits codages à la première émission des données (au moins), et la mise en oeuvre de traitements de contrôle à la (ou chaque) réception.

Ce ou ces codages peuvent être complété d'une technique d'entrelacement où, après codage, on modifie de façon substantielle l'ordre des bits dans chaque séquence de bits envoyés; de la sorte, une perturbation brève ne touche que des bits d'information qui étaient très éloignés les uns des autres dans la séquence originelle. L'ordre normal est bien sûr rétabli après réception avant d'opérer le décodage correcteur d'erreurs.

Il est également possible d'améliorer encore les choses en tenant compte de données physiques comme le gain instantane de reception par radio, ou bien des considérations statistiques sur les antennes diversifiées ou les trajets de propagations multiples.

Dans le bloc CC, il est prévu, en amont de sa partie codeur, un dispositif élémentaire de détection rapide d'erreurs, comme le jalonnement de la trame par des bits de parité en quantités suffisantes. A la réception, l'opération de contrôle d'erreurs (contrôle de parité par exemple) est effectuée en aval de sa partie décodeur.

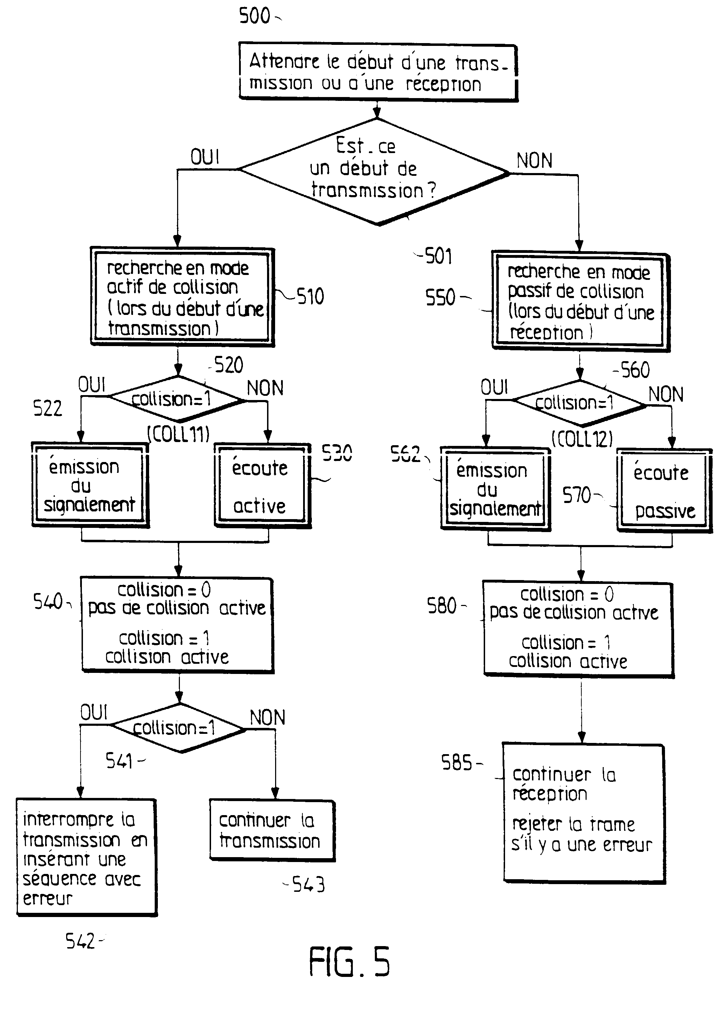

Il est maintenant fait référence à la figure 5, pour la description, en forme de procédé, de la mise en oeuvre de l'invention.

Sur la figure 5, l'étape 500 marque l'attente du début d'une transmission (émission) ou d'une réception.

Sur un tel début, l'étape 501 teste s'il s'agit d'une émission ou d'une réception.

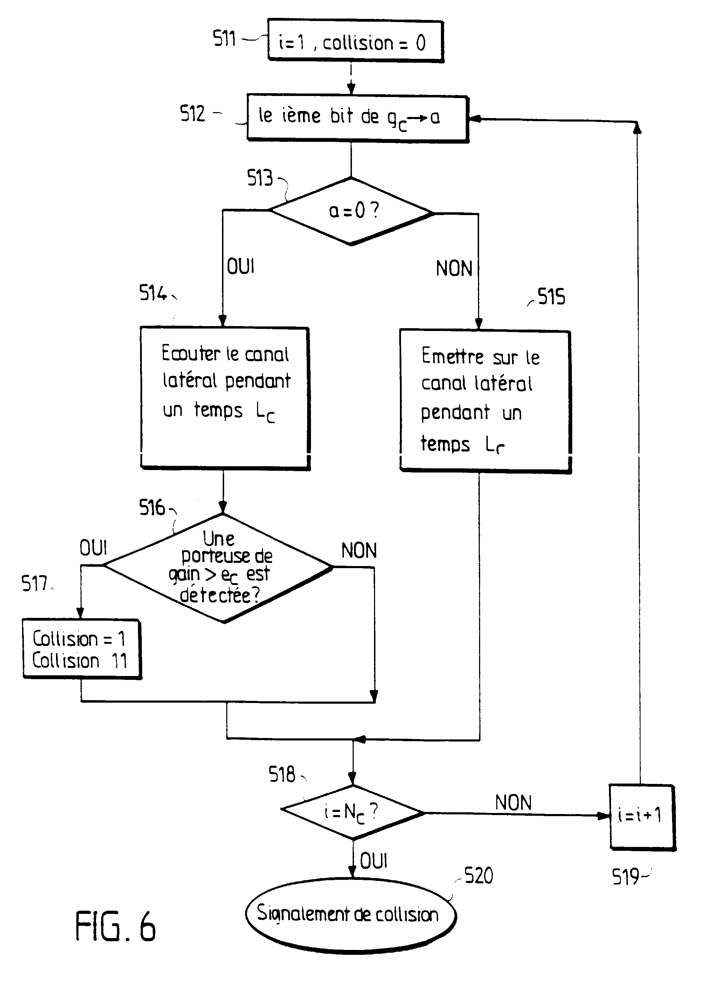

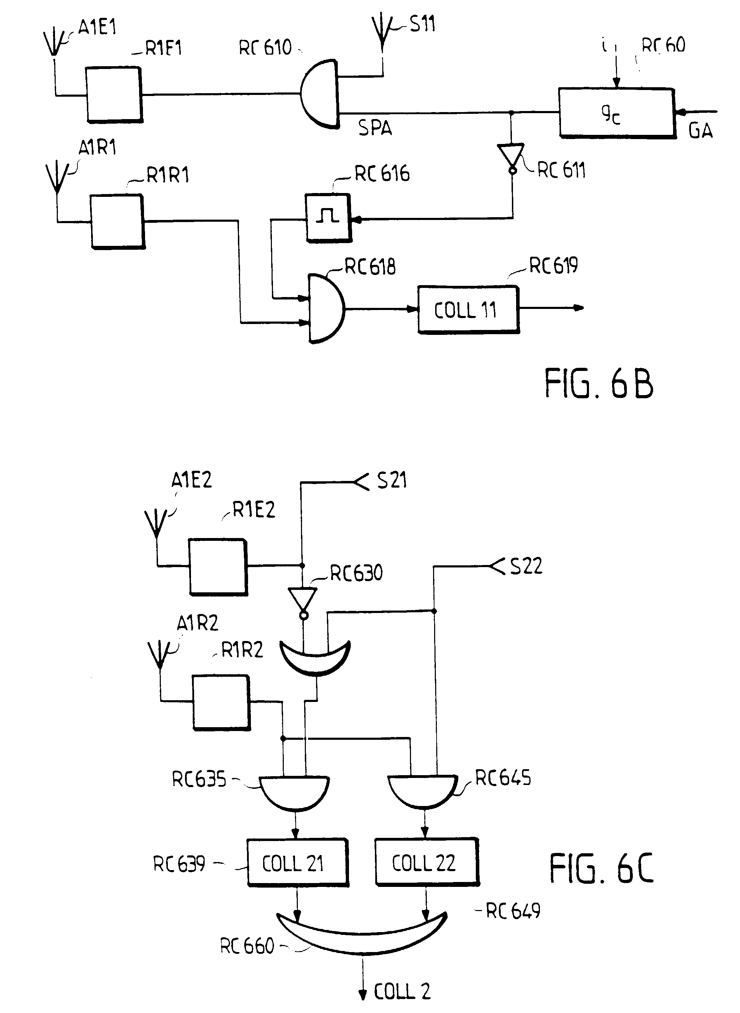

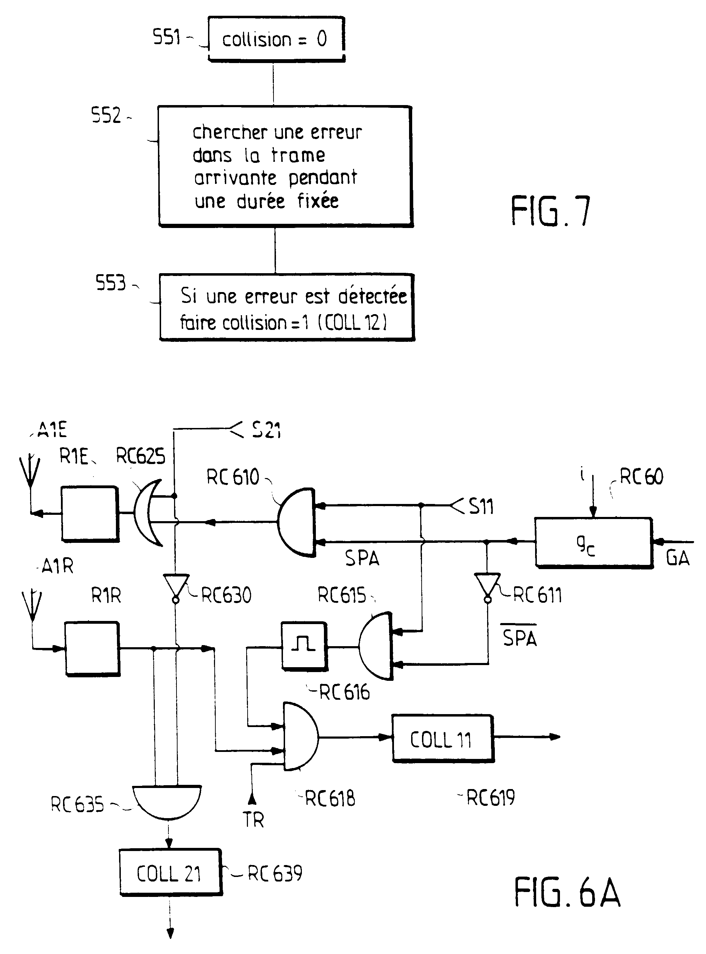

S'agissant d'une émission, on passe à l'étape 510, détaillée sur la figure 6; s'agissant au contraire d'une réception, on passe à l'étape 550, détaillée sur la figure 7.

Dans l'un ou l'autre cas, les étapes suivantes 520 respectivement 560 déterminent si une condition de collision a été reconnue, ce qui est matérialisé par des signaux logiques COLL11 et COLL12, respectivement ( 0 = faux; 1 = vrai).

S'il s'agit d'une collision, on passe aux étapes 522 et 562 respectivement.

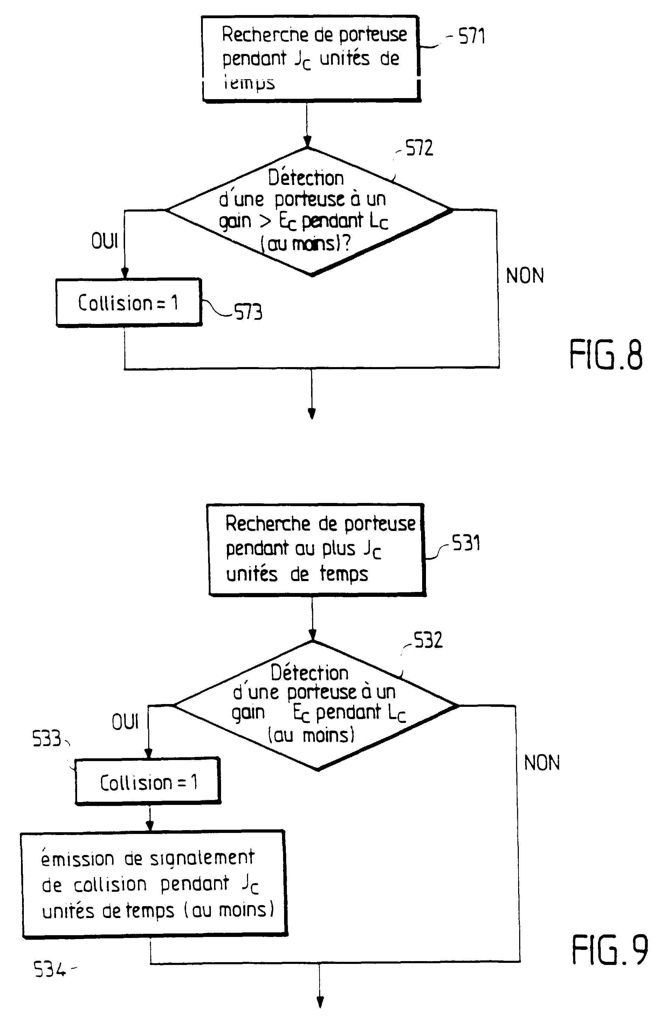

En l'absence de collision, on passe à l'étape 530 d'écoute active s'il s'agissait au départ d'une émission, et au contraire à l'étape 570 d'écoute passive s'il s'agissait d'une réception. Ces étapes 530 et 570 sont détaillées respectivement sur les figures 9 et 8. En variante, l'écoute passive est effectuée dans les deux cas.

Ensuite, on passe aux étapes 540 et 580 respectivement, pour fixer un état de collision en fonction du résultat de l'étape précédente.

Dans un cas, le poste était en début de transmission. L'étape 541 détermine la présence ou l'absence de collision. En présence d'une collision, l'émission est interrompue, de préférence après insertion d'une séquence munie d'une erreur de parité, sur commande spéciale adressée, au bloc CC, comme figuré à l'étape 542. En l'absence de collision, l'émission se poursuit comme l'indique l'étape 543.

Dans l'autre cas, il s'agissait au départ d'une réception. En l'absence de collision, celle-ci continue à l'étape 585 avec toutefois un rejet de la trame en cours si elle comporte une erreur de parité (ou autre).

Le détail de l'étape 550 est relativement simple, et sera dès maintenant décrit en référence à la figure 7. Au départ, la sous-étape 551 établit une condition collision fausse (COLL12 = 0). A l'étape 552, le bloc CC recherche une éventuelle erreur de parité (ou autre) dans la trame arrivante, et ce pendant une durée fixée. A la sous-étape 553, on fait passer le signal COLL12 à 1 si une telle erreur est détectée.

Plus complexe, le détail de l'étape 510 sera maintenant décrit en référence à la figure 6.

Le générateur pseudo-aléatoire GA (figure 3) a fourni un mot pseudo-aléatoire Gc possédant Nc bits.

A l'étape 511, on initialise à 1 un indice de traitement i, tandis que la variable COLL11 est mise à la valeur 0, représentative de collision "fausse".

L'étape 512 consiste à prélever dans le mot $g_c$ son ième bit, que l'on va désigner par a.

L'étape 513 teste si le bit a vaut 0 ou 1. S'il vaut 1, l'étape 515 consiste à émettre sur le premier canal latéral pendant un temps $L_c$. S'il vaut 0, on va au contraire à l'étape 514 écouter sur le premier canal latéral pendant le temps $L_c$.

A l'étape 516, on teste si une porteuse de gain supérieure à une valeur de seuil $e_c$ a été détectée. Si oui, c'est qu'une autre station a émis en même temps (sur la base d'un mot pseudo-aléatoire différent). Dans ce cas, l'étape 517 consiste à faire passer à 1 la variable COLL11.

Dans l'un ou l'autre cas, on retourne ensuite au test 518 qui détermine si l'on est arrivé au dernier bit du mot pseudo-aléatoire GC. Si tel n'est pas le cas, l'étape 519 incrémente l'indice de travail i, et l'on retourne en 512.

La sortie finale consiste à passer à l'étape suivante de signalement de collision, qui est l'étape 520 de la figure 5.

Avantageusement la détection de porteuse de l'étape 516 ne s'effectue pas immédiatement dès le début de l'intervalle de temps d'écoute défini à l'étape 514. On attend de préférence un temps $l_c$, de sorte que le détecteur de collisions ne puisse pas être abusé par l'écho de ses propres émissions.

Par ailleurs, il est fait en sorte que l'émission de l'étape 515 apparaisse de façon continue, lorsque deux bits consécutifs du mot pseudo-aléatoire $g_c$ sont à un.

Ce qui vient d'être décrit concerne la première étape du fonctionnement de l'automate détecteur de collisions, étape qui peut se faire soit dans un état actif, soit dans un état passif, suivant le résultat du test 501 de la figure 5.

La seconde étape succède à la première, après un silence. Ce silence est de préférence au moins égal à $L_c$. En tout, la seconde étape commence donc $(N_c+1)$ $*L_c$ unités de temps après le début de la mise en action de l'automate détecteur de collisions.

Pendant la seconde étape, cet automate présente au moins deux états, à savoir un état d'émission pour signaler ou "diffuser" la collision et un état d'écoute. Il possède de préférence trois états, l'état d'écoute pouvant être une écoute passive ou une écoute active.

On considère maintenant deux nouvelles grandeurs de référence qui sont un seuil de niveau $E_c$ au moins égal au seuil $e_c$ déjà invoqué. On considère aussi une nouvelle constante temporelle $J_c$, plus grande que le temps $L_c$.

Lorsqu'une collision a été détectée (COLL11 = 1, respectivement COLL12 = 1) dans le poste local, les étapes globales 522, respectivement 562, de la figure 5 consistent à émettre sur le premier canal latéral un signal prédéterminé, tel qu'une porteuse pure, pendant $J_c$ unités de temps.

L'écoute passive de l'étape globale 570 est détaillée sur la figure 8: la sous-étape 571 consiste à écouter sur le premier canal latéral pendant $J_c$ unités de temps ; la sous-étape 572 recherche sur ce canal une porteuse possédant un gain supérieur à $E_c$, pendant une durée substantielle, au moins égale à $L_c$ ; si une telle porteuse est détectée pendant le temps ainsi défini, l'étape 573 valide une variable de collision COLL22 à 1.

En quelque sorte, chaque station définit un peigne (irrégulier) d'émission/réception qui lui est propre. $L_c$ est l'horloge utilisée pour définir ce peigne. $L_c$ doit être choisi supérieur au temps pendant lequel on reçoit des échos après émission (fading). $J_c$ est un temps (en principe prédéterminé), choisi suffisant pour que, en présence d'une collision, toutes les stations concernées puissent en avoir connaissance.

Si le poste était en émission précédemment, mais n'a pas détecté àe collision, il peut faire une écoute passive. De préférence, il procède à une écoute active, comme indiqué à l'étape 530 de la figure 5, et détaillé sur la figure 9. Les étapes 531 à 533 de celle-ci sont identiques aux étapes 571 à 573 de la figure 8. L'écoute active consiste simplement à ajouter, en présence d'une collision détectée à l'étape 533, une étape 534 qui module un signal porteur sur le premier canal latéral R1, et ce, pendant au moins $J_c$ unités de temps, pour signaler une collision.

La figure 6A illustre à titre d'exemple une réalisation matérielle de ce qui correspond à l'étape 510 de la figure 5. L'antenne A1 et le récepteur R1 de la figure 3 sont ici décomposés en une partie émission AIE, RIE et une partie réception AIR, RIR. Le bloc GA a construit un mot pseudo-aléatoire $g_c$. Ce mot peut être stocké dans un registre RC60, recevant des impulsions d'horloge qui définissent l'indice de traitement i.

On considère maintenant les deux étapes successives de l'automate de détection de collision, avec l'état actif.

Pendant la première étape, le signal S11 est vrai et le signal S21 faux. Les deux portes ET RC610 et RC615 sont donc validées. Elles reçoivent par ailleurs respectivement le bit courant en sortie du registre RC60 et son complément établi par l'inverseur RC611. Si le bit vaut 1, l'émetteur RIE est excité. Si le bit vaut 0, et après un retard défini par un étage RC616, on surveille la sortie du récepteur R1R, un signal logique COLL11 étant défini par une porte ET RC618. Si on obtient une émission pendant que le bit courant du mot GC est à 1, et après le retard $l_c$ déjà mentionné, COLL11 est vrai (COLL11 = 1 en mémoire RC619).

Pendant la seconde étape de l'automate, le signal S21 est vrai, en cas de collision déjà détectée localement, et l'émetteur R1E est excité via la porte OU RC625. S'il est faux, après complémentation par l'inverseur RC630, on surveille la sortie du récepteur R1R, par une porte ET RC635, qui détermine une condition de collision COLL21, stockée en mémoire RC639, et correspondant à l'écoute (passive, sur cette figure 6A).

Il s'agit alors d'une collision dont le poste est informé par un autre poste, sans l'avoir détectée lui-même. La suite peut être purement passive, ou active, en fonction de critères prédéfinis, qui peuvent être autres que ceux exposés plus haut, et dépendre notamment du mode de résolution de collision choisi.

S'il y a lieu (écoute active) d'accompagner l'émission pour qu'elle dure pendant un temps bien déterminé, il suffit, par exemple, pendant la durée du signal COLL21, de commander directement l'émetteur RIE pour réaliser l'émission de prolongation souhaitée dans le premier canal latéral, sur la porteuse pure de "signalement" ou "diffusion" de l'existence d'une collision.

Les figures 6B et 6C illustrent une variante où l'on a dédoublé le premier canal latéral en deux "premiers" canaux latéraux distincts, suffixés 1 et 2 respectivement en leurs parties émission et réception. Il en résulte des simplifications de circuits. La figure 6B concerne la première étape de l'automate, pour le cas d'une station ayant émis. La figure 6C concerne la seconde étape de l'automate, où l'on a distingué (simplement pour l'illustration) le cas S21 des stations qui ont déjà reconnu la collision, et celui S22 des stations qui ne l'ont pas encore reconnue. Les éléments des deux voies RC635,645 puis RC 639,649 sont les mêmes. Et une fonction OU RC660 en réunit les sorties COLL21 et COLL22 en COLL2.

Le fonctionnement est le suivant:
Les deux étapes S1 et S2 peuvent se dérouler simultanément: on peut écouter en R1R2 pendant la première étape, qui se déroule comme précédemment avec R1E1 et R1R1 pour une station active. Toute collision détectée force l'émission immédiate en R1E2.

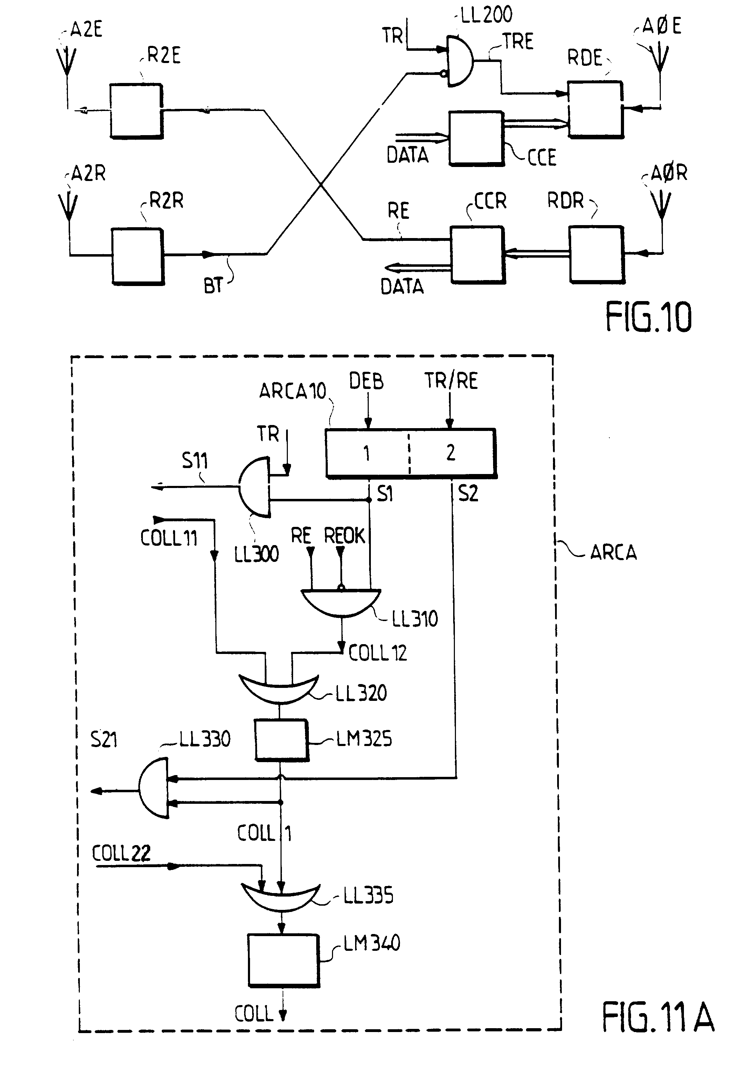

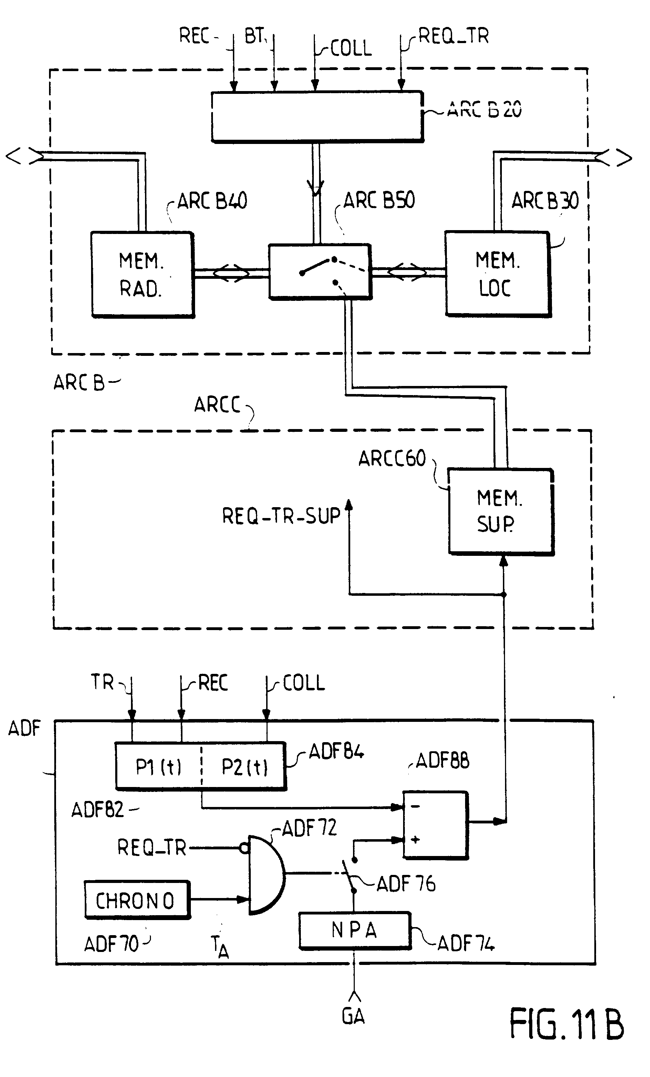

Les fonctions relevant du second (ou troisième, suivant le cas) canal latéral seront maintenant décrites en référence à la figure 10. Comme précédemment (figure 6A), l'antenne A2 et l'étage radio R2 sont subdivisés en des parties émission A2E, R2E et des parties réception A2R, R2R. De meme, pour le canal principal, on sépare sa partie émission A0E et RDE, et sa partie réception A0R et RDR. Dans le bloc CC, on distingue aussi sa partie d'émission CCE et sa partie de réception CCR.

En cas de réception, le codeur CCR fournit d'une part des données, d'autre part une indication RE qu'il est en réception (de signaux démodulables par l'étage RDR). Le signal RE force l'émission d'un signal d'occupation par l'étage R2E du second canal latéral, signifiant que l'éther est occupé, et ceci pour tous les postes à portée radio.

Inversement, en dehors de ce cas d'une réception démodulable en radio, la partie réception R2R du second canal latéral est agencée pour détecter l'existence d'un tel signal d'occupation émis par un autre poste (au dessus d'un seuil de niveau), et fournir alors un signal logique BT = 1 , indiquant une occupation de l'éther sur le canal principal.

Une fonction logique ET LL200 reçoit l'ordre d'émission de base TR, et le signal BT complémenté (la complémentation est manifestée par un petit cercle sur l'entrée de la porte LL200). L'ordre d'émission de base TR ne devient donc ordre confirmatif d'émission TRE que si aucun signal d'occupation BT n'est reçu. Si TRE est vrai, l'étage émetteur RDE est autorisé à émettre des paquets ou trames de données, qu'il reçoit après transformation convenable du circuit codeur d'émission CCE.

Le signal d'occupation peut être utilisé de plusieurs manières:

- dans le mode de réalisation décrit, il est émis par tous les postes recevant un signal démodulable ;
- une première variante consiste à interrompre ce signal dès qu'une erreur de réception est constatée ; l'absence de signal d'occupation peut alors servir d'indicateur de collision, éventuellement même être le seul, sous certaines conditions ;
- dans une seconde variante, seule la ou les stations destinatrices (primaires) du message émettent le signal d'occupation (au choix, toute ou aucune n'a émis au début, pendant le temps nécessaire au décodage du destinataire) ;
- une autre variante consiste à émettre un signal d'occupation lorque le signal reçu est non seulement démodulable mais aussi décodable. Dans ce cas, on peut définir la collision par le fait qu'en présence d'une transmission, aucun signal d'occupation n'est émis.

Certaines de ces variantes peuvent être combinées.

Il est maintenant fait référence à la figure IIA, qui décrit la partie ARCA du bloc ARC de la figure 3.

Un séquenceur ARCA10 définit les étapes 1 et 2, en fonction par exemple d'un signal logique de début DEB et d'un signal logique TR/RE indiquant s'il s'agit d'une émission ou d'une réception.

En découlent des signaux logiques S1 et S2 représentatifs respectivement des premières et secondes étapes de l'automate détecteur de collisions. Si l'on est en émission (TR), une porte logique LL300 met à vrai un signal S11 (première étape, état actif). Ce signal SII pilote les circuits de la figure 6A déjà décrits. Ceux-ci peuvent fournir en retour un signal de collision COLL11, détectée sur une émission locale.

Si on est en réception, c'est une porte ET LL310 qui intervient. Elle possède une entrée recevant le signal RE représentatif de réception, une entrée recevant le signal S1 et une troisième entrée recevant, complémenté, le signal REOK. Une réception d'une trame incorrecte va établir un signal logique de collision détectée COLL12, représentatif d'une collision en réception, imputable à des postes autres.

Une porte ET LL320 réunit les signaux COLL11 et COLL12 en un signal COLL1, mémorisé dans une mémoire LM325 (détection locale de collision). Si une collision est mémorisée en COLL1, une porte LL330 réunit les signaux COLL1 et S2 pour rétablir dans la seconde étape l'état d'émission sur collision, par un signal logique S21 = 1.

Sinon (S21 = 0), l'écoute active ou passive fournira le cas échéant un signal de collision COLL22 = 1. Il indique une collision reconnue par d'autres postes, mais non détectée par le poste local. La réunion par une fonction OU LL335 des signaux COLL1 et COLL22, mémorisée en LM340, fournit le signal définitif de collision détectée COLL.

Les éléments qui viennent d'être décrits peuvent faire l'objet de différentes variantes.

Tout d'abord, il est envisageable dans certains cas de n'effectuer la détection de collision qu'en mode réception. Dans ce cas, le dispositif gérant les émissions/réceptions alternées pseudo-aléatoires sur le premier canal latéral peut être supprimé.

Ensuite, la collision n'intervient pas toujours en début de paquet. Une erreur peut en effet être trouvée en cours de paquet ("collision tardive"). En ce cas, des critères prédéfinis déterminent si l'on signale ou non une collision: en simplifiant on peut décider a priori de toujours signaler une collision tardive, ou au contraire de ne jamais la signaler.

La figure 11B illustre de façon simplifiée les fonctions générales de la résolution de collision.

Les signaux requis minimaux sont :

- un signal de requête d'émission en cours REQ_TR,
- un signal de réception en cours REC,
- un signal d'occupation du canal de données BT, et
- le signal de collision à traiter COLL.

Tout cela est appliqué à un automate ARCB 20, qui opère selon un procédé de résolution de collision connu, tel que le BEB ("Binary Exponential Backoff" ou Décalage exponentiel binaire). En variante, ce peut être l'un des procédés récemment introduits pour réaliser une résolution de collision déterministe, c'est-a-dire en temps limité. Avantageusement, c'est le procédé de résolution de collision décrit dans la Demande de Brevet précitée.

Schématiquement, le bloc ARCB comprend une mémoire de trames locales ARCB30, et une mémoire de trames radio ARCB40, avec entre les deux un mécanisme de commutation ARCB50, qui permet de :

- traiter les signaux reçus, si l'on est en réception effective de signaux utilisables,
- décider si l'on a le droit d'émettre, en l'absence de collisions,
- résoudre une collision, en fixant quand on va essayer d'émettre, et en indiquant à quel moment cette tentative d'émission sur collision sera considérée comme réussie, c'est-à-dire non génératrice elle-même d'une collision.

Selon un aspect intéressant de l'invention, le commutateur ARCB50 de la figure 11B reçoit également des signaux provenant d'une mémoire supplémentaire ARCC60, qui contient des messages artificiels sur lesquels on reviendra plus loin. Il lui est naturellement associé un signal de requête de transmission supplémentaire REQ_TR_SUP.

Avant d'expliquer le rôle premier de ces messages artificiels, il convient de revenir brièvement sur le fonctionnement des dispositifs d'émission-réception radio.

Ces dispositifs souffrent généralement de ce qu'on appelle une dérive en fréquence : les dispositifs oscillants - quartz et autres - subissent des variations de fréquences, qui peuvent aller jusqu'à compromettre l'efficacité de la réception. Bien entendu, on sait aménager de tels dispositifs, de façon que lorsqu'un dispositif de réception est décalé en fréquence par rapport à son émetteur, le récepteur se recale automatiquement sur le second dans une phase d'accrochage. Cette phase d'accrochage possède une durée supportable lorsque le décalage initial est faible. Par contre, elle pourrait devenir extrêmement longue si ce décalage est important, et compromettre par là le fonctionnement d'un réseau informatique radio.

Le Demandeur a donc estimé qu'il est souhaitable, lorsque le trafic radio est insuffisant pour assurer un temps suffisamment bref de synchronisation des réceptions sur les émissions, d'augmenter artificiellement ce trafic par des messages artificiels.

Intervient alors une difficulté considérable : le trafic artificiel doit assurer un débit permanent et non négligeable pour assurer un recalage permanent des différents émetteurs-récepteurs radio. Mais il doit aussi pouvoir s'effacer très rapidement lorsque le trafic naturel redevient suffisant. Ceci doit, en plus, être obtenu en tenant compte des particularités du milieu de transmission radio, qui est un milieu de transmission distribuée, susceptible de nombreuses configurations différentes.

Après analyse de cette situation, le Demandeur a estimé qu'il fallait assurer un équilibre statistique convenable d'émission-réception : en d'autres termes, il faut que la somme des débits des trafics naturels et artificiels soit égale à une quantité établie à l'avance. Mais il faut en outre que cette propriété soit vérifiée dans chacune des cellules (zones de portée) entourant chaque poste ou station. L'homme du métier comprendra alors que la résolution théorique de ce problème implique des calculs d'une complexité énorme, qu'il est exclu de mettre en oeuvre et temps réel et in situ sans compromettre gravement le fonctionnement du réseau.

Il sera donc proposé ici une solution de compromis, qui apparaît donner satisfaction.

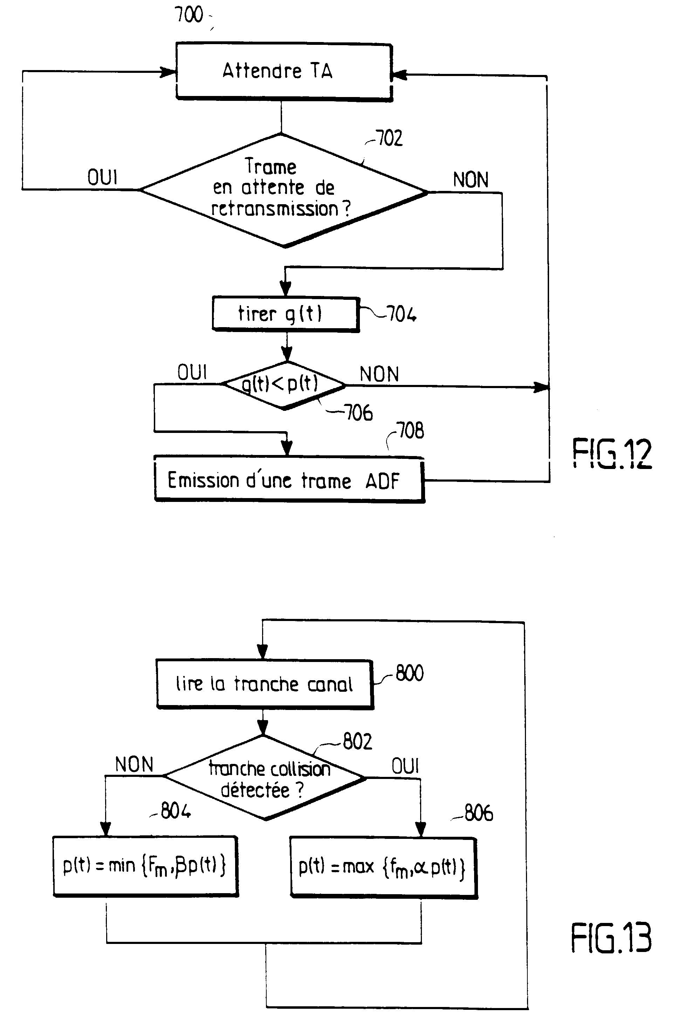

Le bloc ADF est chargé de déterminer de quelle manière il faut produire l'émission de messages artificiels. Ce bloc ADF (figure 11B) est articulé sur un circuit chronométrique ADF70, qui définit des instants de contrôle avec une périodicité $T_A$ (étape 700, fig.12). Par exemple, des impulsions de periode $T_A$ sont appliquées à une fonction ET ADF72, qui reçoit par ailleurs le signal de requête locale de transmission, complémenté, REQ_TR/ (la barre oblique finale marque un signal complémenté). Si, à l'instant $T_A$, il n'y a pas de requête d'émission locale (test 702), alors on va fermer le commutateur ADF76 pour autoriser un registre ADF74 à fournir un nombre pseudo-aléatoire NPA, qui aura été obtenu (704) du générateur GA de la figure 3. Ce nombre pseudo-aléatoire est appliqué à l'entrée négative d'un comparateur numérique ADF88.

On note g(t) la valeur en cours du nombre pseudo-aléatoire NPA.

En parallèle, l'ensemble de blocs ADF82 et ADF84 entretient une grandeur de probabilité p(t). La grandeur p(t) est transmise à l'entrée positive du comparateur numérique ADF88. Si le comparateur indique (test 706) que g(t) est inférieur à p(t), alors on va produire la requête de transmission supplémentaire REQ_TR_SUP, pour solliciter la transmission de messages artificiels (708).

S'il y a une trame de données effectives en attente de transmission dans le circuit ARCB, on va simplement inhiber la sortie du comparateur ADF88.

La définition de la grandeur p(t) est reliée à l'observation du milieu ou canal de transmission, pour laquelle on s'astreint à avoir un nombre limitatif d'états ou plutôt "observations" différents, dont un et un seul est valable à tout instant. Ce peut être les observations :

- tranche de collision,
- tranche vide,
- transmission en cours (émission ou réception).

Une manière de définir ces observations est décrite dans la demande de brevet du même jour déjà citée.

La grandeur p(t) est définie de façon récurrente à partir de sa valeur précédente et de l'observation d'un changement a'état du canal.

A chaque observation d'état (changements d'état aussi bien que nouvel événement du même état - par exemple nouvelle collision, alors que l'on est déjà dans l'état de collision), on réactualise p(t) en fonction de sa valeur précédente et de l'état observé :

$$h[p(t),o] \rightarrow p(t)$$

où "o" désigne l'état observé.

Toute fonction h[ ] qui assure que p(t) diminue en cas d'abondance de tranches de collision et augmente en cas d'abondance de tranches vides peut convenir.

Avec les trois états définis plus haut, et le mode de résolution de collision de la demande parallèle du même jour, le Demandeur considère actuellement comme préférable que:

-   h[p(t),"collision"] = MAX {$f_m$ , a * p(t) } (étape 806)
-   h[p(t),"vide"] = MIN {$F_m$ , b * p(t)} (étape 804)
-   h[p(t),"transmission"] = p(t), comme indiqué par le retour direct de l'étape 702 en 700,

où :

-   a et b sont deux constantes, avec a inférieur à 1 et b supérieur à 1,
-   $f_m$ et $F_m$ sont deux autres constantes, avec $f_m$ inférieur à $F_m$, lui-même inférieur ou égal à 1,
-   MIN{} et MAX{} sont deux fonctions délivrant respectivement le minimum et le maximum de deux valeurs.

Reste à définir le contenu des messages artificiels.

Ceux-ci peuvent être purement artificiels, c'est-à-dire uniquement constitués de zéros, par exemple.

Ils peuvent être utilisés pour transmettre les informations de routage sur lesquelles on reviendra ci-après.

Ils peuvent encore être utilisés pour transmettre des informations utiles à la récupération des données, lorsque celles-ci sont transcodées, ce qui peut se faire de différentes manières.

On va maintenant décrire les fonctions du bloc de traitement de routage RL de la figure 3, qui correspond à la nouvelle couche dite "MR", proposée conformément à l'invention. Référence est également faite aux figures 4 pour les formats de messages.

Il est rappelé tout d'abord que le raccord standard IEEE 802 ou RE (figure 3) reconnaît, à la base, des messages dont le format est celui de la figure 4A.

S'agissant de trames à émettre, la première fonction du bloc RL est donc d'examiner l'adresse de destinataire contenue dans l'entête de la figure 4A. Le bloc RL consulte alors sa table de routage locale. Le cas échéant, il va modifier l'en-tête de la trame, de façon que cette dernière soit transmise à une station intermédiaire qui se trouve à portée radio. Le format du paquet ou trame est alors celui de la figure 4B.

Ceci fait, la trame complète est adressée au bloc ARC, pour traiter l'émission, en résolvant d'éventuelles collisions.

En réception, lorsqu'une trame est reçue sans erreur, le bloc ARC la transmet au bloc RL, qui détermine tout d'abord si l'adresse de transit ou de relais contenue dans l'en-tête est bien celle de sa station locale. Si cette condition n'est pas vérifiée, la trame peut être ignorée.

Si le destinataire de transit est le même que le destinataire réel, il s'agit d'une trame arrivée à destination, et celle-ci est directement transmise au bloc RE, après correction de son en-tête pour passer du format de la figure 4B au format de la figure 4A.

Dans le cas inverse, le routeur fait exactement comme si la trame avait été obtenue du raccord RE, avec requête d'émission : il consulte sa table de routage locale, et modifie de nouveau l'en-tête de la trame, pour y inscrire une nouvelle station intermédiaire, ou bien le destinataire final, après quoi la trame est renvoyée au bloc ARC. Il est envisageable qu'une copie en soit soumise au bloc RE, pour information.

Reste à définir la table de routage locale. Celle-ci peut partir d'une version initialisée ou préétablie, mais il est souhaitable de la mettre à jour en permanence. Cette mise à jour peut être conduite à partir des trames reçues normalement du bloc ARC.

Chaque trame normalement reçue comporte l'indication de son émetteur immédiat. Il est donc possible au bloc RL d'entretenir en permanence une table des postes ou stations voisines qu'il reçoit. En outre, à intervalles réguliers, le bloc RL va créer une trame spontanée, par laquelle il diffuse aux autres stations à sa portée radio une partie au moins du contenu de sa table de routage (stations qu'il reçoit). Cette trame spontanée peut être incorporée au trafic artificiel lorsqu'il en est créé. Elle peut être créée d'autorité lorsqu'il n'y a pas nécessité de trafic artificiel.

Ceci fait que chaque station connaît de lui-même les stations qu'il reçoit, et, par informations transmises, les stations qui le reçoivent. Il en résulte la possibilité de construire deux tables, que l'on appellera :

-   registre d'émission (les stations que l'on entend)
-   registre de réception (les stations dont on est entendu).

Pour un poste donné (noté A ci-après), les stations qui sont dans les deux registres sont en relation de "portée symétrique" avec ce poste. Un routage ne pourra avoir lieu qu'à l'aide des stations vérifiant cette condition de portée symétrique.

A partir de là, chaque poste A pourra communiquer directement (1 transmission) avec ses homologues à "portée symétrique", indirectement (2 transmissions) avec d'autres postes à "portée symétrique" des premiers, lesquels servent de relais, et ainsi de suite. il est concevable de fixer une limite au nombre de stations relais admises, que l'on appellera ci-après "nombre de sauts".

Il est maintenant possible de construire une troisième table que l'on appellera "directoire topologique" pour chaque station. Ce directoire est une matrice rectangulaire ou à deux entrées avec par exemple en colonnes les numéros des stations inscrites au registre d'émission de A, c'est-à-dire qui reçoivent directement le poste en cours, et en ordonnées les numéros de toutes les stations qui sont accessibles à partir du poste en cours. Chaque cellule de ce tableau va contenir le nombre de sauts nécessaires pour atteindre la station visée finalement.

L'homme du métier comprendra que la mise à jour de ce directoire topologique peut être faite à partir des tables de routage reçues par la station considérée de la part des autres stations qui sont à portée radio.

Pour effectuer cette mise à jour, il suffit de considérer toute trame décodable reçue "au vol" par cette station, en examinant dans l'en-tête de ses trames quelle est la source intermédiaire, quelle est la source réelle, et quel est le nombre de sauts déjà effectués par le paquet de données considérées.

En effet, la zone tampon du format de message de la figure 4B comprend à la base au moins un code indiquant qu'il s'agit d'une transmission de point à point, c'est-à-dire intéressant uniquement une station émettrice initiale et une station réceptrice finale, avec le nombre de sauts qu'il est prévu de faire pour passer de l'une à l'autre.

Là encore, il est commode que chaque station émette à intervalles réguliers sa table de routage, ce qui permet une vérification de la cohérence des différentes tables de routage des différentes stations.

Une variante intéressante est le "routage en diffusion".

Ceci se fait sur une requête spéciale, utilisant une forme particulière pour l'adresse du destinataire dans la trame IEEE 802.3 de la figure 4A, par exemple le fait que cette adresse commence par un 0. Ceci signifiera que le message concerne un sous-ensemble déterminé des stations du réseau, voire toutes les stations du réseau.

Il faut alors disposer de deux tables supplémentaires :

- une table de diffusion, et
- un répertoire de diffusion.

La table de diffusion rassemble les numéros de stations à portée symétrique, ou un sous-ensemble de celles-ci (ce sous-ensemble devant vérifier la propriété qu'il existe toujours une station dans la table de diffusion qui permette d'atteindre une quelconque des stations du réseau, ou une quelconque des stations visées par la diffusion).

Le répertoire des diffusions garde en mémoire les numéros de diffusion d'un certain nombre des dernières communications en diffusion qui ont atteint la station locale.

Le Demandeur considère qu'il est alors avantageux d'utiliser le format de la figure 4D, où la zone tampon comprend un code de diffusion, un nombre de relais visés, différents destinataires, un numéro de diffusion et un nombre de sauts admissibles.

L'invention peut être modifiée de différentes manières.

Par exemple, un canal latéral peut être utilisé pour détecter les collisions, par exemple comme décrit plus haut en référence au signal d'occupation, mais sans recourir au signalement de collision par un canal latéral.

De même, l'usage du signal d'occupation peut se faire sans recourir au signalement de collision par un canal latéral.

De plus, les mots utilisés ici doivent être interprètes largement. Par exemple, "procéder à une émission sur collision via un canal latéral" couvre le cas où l'on modifierait une émission, en sa porteuse ou toute modulation de celle-ci, et même le cas où l'on arrête l'émission. De nombreuses inversions de ce genre sont envisageables.

## Revendications

1. Installation de transmission de données, du type comprenant au moins deux postes de traitement de données (Pa, Pb), munis chacun d'une interface-réseau (Ia, Ib), capable de transmettre des messages sur requête, et de recueillir des messages reçus, ainsi que d'un dispositif de gestion d'émission/réception (ARC) muni d'un détecteur de collision, et un moyen de résolution de collision, consécutivement à une condition de collision reconnue, ce dispositif de gestion donnant des ordres confirmatifs d'émission ou de réception, caractérisée en ce que chacun des deux postes comporte un dispositif d'émission-réception radio, avec un émetteur-récepteur (RD) opérant sur un canal dit central, pour la transmission des messages à échanger, commandé conformément auxdits ordres confirmatifs, et un émetteur-récepteur auxiliaire (R1) opérant sur au moins un canal latéral, possédant un état normal, et agencé pour modifier son état d'émission/réception en réponse à une collision détectée.

2. Installation selon la revendication 1, caractérisée en ce que l'interface-réseau est agencée (RC) pour reconnaître une collision en réception par violation d'un critère prédéfini.

3. Installation selon l'une des revendications 1 et 2, caractérisée en ce que l'émetteur-récepteur auxiliaire est capable de commutation émission/réception rapide, et en ce que, en réponse au moins au début d'un ordre confirmatif d'émission, l'émetteur/récepteur auxiliaire (R1) est agencé pour opérer en émission/réception rapidement alternée, selon un motif choisi pour être propre à ce dispositif d'émission/réception, une collision étant reconnue par le détecteur de collision si un signal de niveau supérieur à un premier seuil de niveau est reçu durant une partie substantielle d'au moins un silence de ce canal latéral, manifestant l'émission concomitante d'un autre poste sur le canal latéral.

4. Installation selon la revendication 3, caractérisée en ce que le motif choisi est sensiblement aléatoire.

5. Installation selon l'une des revendications 1 à 4, caractérisée en ce que le détecteur de collision (ARCA) est un automate, possédant une première étape, où il peut prendre un premier état dit passif et un second état dit actif, cet automate étant mis à l'état actif sur un ordre confirmatif d'émission, tandis qu'il est autrement à l'état passif, en particulier en réponse à la reconnaissance d'un début de réception de message, en ce qu'en son état actif, l'automate détecteur de collision commande l'émetteur/récepteur auxiliaire en émission/réception rapidement alternée selon un motif choisi, tandis qu'en son état passif, il peut placer cet émetteur/récepteur auxiliaire en réception, et en ce que l'automate détecteur de collision possède une seconde étape, où il possède un premier état pour l'émission sur collision et au moins un autre état pour l'écoute, tandis que toute collision reconnue lors de la première étape force la seconde étape à l'émission sur collision, pour informer d'autres postes de la collision, et qu'autrement l'automate passe en écoute.

6. Installation selon la revendication 5, caractérisé en ce que le premier canal latéral est dédoublé en deux premiers canaux latéraux, dont l'un sert aux fonctions de la première étape, et l'autre à l'émission sur collision de la seconde étape, laquelle peut être immédiate.

7. Installation selon l'une des revendications 5 et 6, caractérisée en ce que l'automate détecteur de collision (ARCA) possède en sa seconde étape, un second état dit écoute active et un troisième état dit écoute passive, l'un ou l'autre état étant pris selon l'état précédent pendant la première étape, l'état d'écoute active assurant une intervention d'émission sur le canal latéral, pour accompagner toute émission sur collision, de sorte qu'elle présente des caractéristiques prédéterminées.

8. Installation selon l'une des revendications 1 à 7, caractérisée en ce que chaque dispositif d'émission-réception radio est agencé pour opérer sur un second canal latéral (R2), sur lequel il émet un signal d'occupation tant qu'il reçoit un signal démodulable sur son canal principal, tandis que l'émission de données est interdite pour tout poste dont le dispositif d'émission-réception radio reçoit le signal d'occupation sur son second canal latéral.

9. Installation selon l'une des revendications 1 à 8, caractérisée en ce que, en l'absence de trafic naturel suffisant, le dispositif de gestion est apte (ARCC; ADF) à forcer l'émission de messages artificiels, afin de maintenir un calage mutuel des fréquences pilotes des différents postes.

10. Installation selon la revendication 9, caractérisée en ce que chaque dispositif de gestion est agencé pour procéder à ladite émission de messages artificiels de façon sensiblement aléatoire.

11. Installation selon l'une des revendications 9 et 10, caractérisée en ce que certains au moins des messages artificiels sont utilisés à des fins de service.

12. Installation selon la revendication 11, caractérisée en ce que certains au moins des messages artificiels sont utilisés pour l'échange d'informations utiles à la compréhension des messages.

13. Installation selon l'une des revendications 11 et 12, caractérisée en ce que chaque dispositif de gestion (ARCB) est apte à commander l'émission non seulement sur requête locale, mais aussi en tant que relais de transmission entre postes éloignés, et en ce que certains au moins des messages artificiels sont utilisés pour l'échange de tables de routage, définissant ces relais de transmission.

14. Installation selon la revendication 13, caractérisée en ce que chaque dispositif de gestion entretient au moins une liste des postes qu'il reçoit, et la transmet comme message artificiel, ce qui lui permet réciproquement d'entretenir une liste des postes qui le reçoivent à partir des messages artificiels qu'il reçoit.

15. Installation selon la revendication 14, caractérisée en ce que chaque dispositif de gestion entretient également :

    - un directoire topologique désignant au moins une partie des postes avec lesquels il peut communiquer, directement ou indirectement, et définissant le ou les cheminements de cette communication, et
    - une table de routage définissant à tout moment un cheminement préférentiel.

16. Installation selon l'une des revendications précédentes, caractérisée en ce que les messages sont au format standard ISO pour la norme IEEE 802.3, augmenté d'un en-tête préliminaire.

17. Procédé de transmission de données, selon lequel :

    - on prévoit au moins deux postes de traitement de données (Pa, Pb), munis chacun d'une interface-réseau (Ia, Ib), capable de coopérer avec un milieu de transmission commun pour émettre des messages sur requête, et pour recueillir des messages reçus, ainsi que d'établir des ordres confirmatifs d'émission ou de réception,

    caractérisé en ce qu'en chaque poste, l'émission/réception des données est réalisée sur un canal radio dit central (RD), commandé conformément auxdits ordres confirmatifs, et
    en ce que, en réponse à une détection de collision, il est effectué sur un canal latéral (R1), une émission sur collision, de caractéristiques prédéterminées, pour informer d'autres postes de la collision.

18. Procédé selon la revendication 17, caractérisé en ce qu'une collision en réception est reconnue par violation d'un critère prédéfini.

19. Procédé selon l'une des revendications 17 à 18, caractérisé en ce que, au moins au début d'un ordre confirmatif d'émission dans un poste, il est effectué sur un canal latéral (R1), une émission/réception rapidement alternée, selon un motif choisi propre à ce poste, une collision étant reconnue si un signal de niveau supérieur à un premier seuil de niveau est reçu pendant une partie substantielle d'au moins un silence de ce canal latéral, manifestant l'émission concomitante d'un autre poste sur le canal latéral.

20. Procédé selon l'une des revendications 17 à 19, caractérisé en ce que tout poste qui reçoit des messages démodulables sur son canal principal émet sur un second canal latéral (R2) un signal d'occupation, tandis que l'émission de données est interdite pour tout poste dont le dispositif d'émission-réception radio reçoit un tel signal d'occupation sur son second canal latéral.

21. Procédé selon l'une des revendications 17 à 20, caractérisé en ce que, en l'absence de requête d'émission locale et de réception, tout poste émet des messages artificiels (ARCC; ADF), afin de maintenir un calage mutuel des fréquences pilotes des différents postes.

22. Procédé selon la revendication 21, caractérisé en ce que certains au moins des messages artificiels sont utilisés à des fins de service.

23. Procédé selon l'une des revendications 17 à 22, caractérisé en ce que chaque poste peut émettre ses propres messages ou relayer ceux d'autrui, en fonctions d'informations dites tables de routage, définissant ces relais de transmission.

24. Procédé selon la revendication 23, caractérisé en ce que chaque poste entretient une liste des postes qu'il reçoit, et la transmet comme message, ce qui lui permet réciproquement d'entretenir une liste des postes qui le reçoivent.

25. Procédé selon la revendication 24, caractérisé en ce que chaque poste entretient également :

- un directoire topologique désignant au moins une partie des postes avec lesquels il peut communiquer, directement ou indirectement, et définissant le ou les cheminements de cette communication, et

- une table de routage définissant à tout moment un cheminement préférentiel.

**Patentansprüche**

1. Datenübertragungsanlage des Typs mit wenigstens zwei Datenverarbeitungsgeräte (Pa, Pb), jedes ausgestattet mit einer Netzschnittstelle (Ia, Ib) und fähig, auf Anfrage Mitteilungen zu übertragen und empfangene Mitteilungen aufzunehmen, eine Sende-Empfangs-Steuervorrichtung (ARC) umfassend, ausgestattet mit einem Kollisionsdetektor und einer Einrichtung zur Kollisionsauflösung nach einer erkannten Kollisionsbedingung, wobei diese Steuervorrichtung Sendung- oder Empfang-Bestätigungsbefehle gibt,
**dadurch gekennzeichnet**, daß jedes der beiden Geräte eine Funk-Sende-Empfangsvorrichtung mit einem Sender-Empfänger (RD) umfaßt, der auf einem sogenannten zentralen Kanal arbeitet, um auszutauschende Mitteilungen zu übertragen, gesteuert gemäß der genannten Bestätigungsbefehle, sowie einen zusätzlichen Sender-Empfänger (R1), der auf wenigstens einem Seitenkanal arbeitet und einen Normalzustand bzw. -status besitzt und eingerichtet ist, um seinen Sende-Empfangszustand als Reaktion auf eine detektierte Kollision zu modifizieren.

2. Anlage nach Anspruch 1, dadurch gekennzeichnet, daß die Netzschnittstelle eingerichtet ist (RC), um eine Kollision bei Empfang durch Verletzung eines festgelegten Kriteriums zu erkennen.

3. Anlage nach einem der Ansprüche 1 und 2, dadurch gekennzeichnet, daß der zusätzliche Sender-Empfänger zur Sendung/Empfang-Schnellumschaltung fähig ist, und dadurch, daß der zusätzliche Sender-Empfänger (R1) so eingerichtet ist, daß er als Reaktion auf einen Sendung-Bestätigungsbefehls wenigstens am Anfang schnell abwechselnd auf Sendung/Empfang arbeiten kann, nach einem eigens für diese Sende-Empfangsvorrichtung ausgewählten Muster, wobei eine Kollision durch den Kollisionsdetektor erkannt wird, wenn ein Signal mit einem höheren Pegel als ein erster Schwellenwertpegel während eines wesentlichen Teils von wenigstens einer Pause dieses Seitenkanals empfangen wird, das die konkomittierende Sendung eines anderen Geräts auf dem Seitenkanal anzeigt.

4. Anlage nach Anspruch 3, dadurch gekennzeichnet, daß das gewählte Muster im wesentlichen zufällig ist.

5. Anlage nach einem der Ansprüche 1 bis 4, daß der Kollisionsdetektor (ARCA) ein Automat ist, der einen ersten Schritt umfaßt, wo er einen ersten, passiv genannten Zustand und einen zweiten, aktiv genannten Zustand einnehmen kann, wobei dieser Automat durch einen Sendung-Bestätigungsbefehl in den aktiven Zustand versetzt wird, während er andernfalls im passiven Zustand ist, insbesondere als Reaktion auf die Erkennung eines Anfangs des Empfangs einer Mitteilung, dadurch, daß der Kollisionsdetektionsautomat in seinem aktiven Zustand den zusätzlichen Sender-Empfänger nach einem gewählten Muster schnell abwechselnd auf Sendung/Empfang steuert, während er in seinem passiven Zustand diesen zusätzlichen Sender-Empfänger auf Empfang stellen kann, und dadurch, daß der Kollisionsdetektionsautomat einen zweiten Schritt umfaßt, wo er einen ersten Zustand zum Senden nach Kollision und wenigstens einen weiteren Zustand zum Abhören umfaßt, während jede im ersten Schritt erkannte Kollision den zweiten Schritt zum Senden nach Kollision zwingt, um andere Geräte über die Kollision zu informieren, und daß der Automat andernfalls zum Abhören übergeht.

6. Anlage nach Anspruch 5, dadurch gekennzeichnet, daß der erste Seitenkanal verdoppelt wird zu zwei ersten Seitenkanälen, von denen einer den Funktionen des ersten Schritts dient und der andere dem Sendung nach Kollision des zweiten Schritts, der sofort erfolgen kann.

7. Anlage nach einem der Ansprüche 5 und 6, dadurch gekennzeichnet, daß der Kollisionsdetektionsautomat (ARCA) in seinem zweiten Schritt einen zweiten, Aktivabhörung genannten Zustand und einen dritten, Passivabhörung genannten Zustand umfaßt, wobei der eine oder der andere Zustand entsprechend dem vorhergehenden Zustand während des ersten Schrittes genommen wird und der Aktivabhörungszustand ein Eingreifen in die Sendung auf dem Seitenkanal gewährleistet, um jede Sendung nach einer Kollision zu begleiten, so daß sie festgelegte Charakteristika aufweist.

8. Anlage nach einem der Ansprüche 1 bis 7, dadurch gekennzeichnet, daß jede Funk-Sende-Empfangsvorrichtung eingerichtet ist, um auf einem zweiten Seitenkanal (R2) zu arbeiten, auf dem sie ein Besetzt-Signal sendet, sobald sie auf ihrem Hauptkanal ein demodulierbares Signal erhält, während die Sendung von Daten für jedes Gerät verboten ist, von dem die Funk-Sende-Empfangsvorrichtung auf ihrem zweiten Seitenkanal das Besetzt-Signal empfängt.

9. Anlage nach einem der Ansprüche 1 bis 8, dadurch gekennzeichnet, daß bei Fehlen von ausreichendem natürlichem Verkehr die Steuervorrichtung fähig ist (ARCC; ADF), die Sendung von künstlichen Mitteilungen zu erzwingen, um eine gegenseitig optimale Einstellung der Pilotfrequenzen der verschiedenen Geräte aufrechtzuerhalten.

10. Anlage nach Anspruch 9, dadurch gekennzeichnet, daß jede Steuervorrichtung eingerichtet ist, um die genannte Aussendung künstlicher Mitteilungen von im wesentlichen zufälliger Art durchzuführen.

11. Anlage nach einem der Ansprüche 9 und 10, dadurch gekennzeichnet, daß wenigstens einige der künstlichen Mitteilungen für Dienstzwecken benutzt werden.

12. Anlage nach Anspruch 11, dadurch gekennzeichnet, daß wenigstens einige der künstlichen Mitteilungen zum Austausch von für das Verständnis der Mitteilungen nützlichen Informationen benutzt werden.

13. Anlage nach einem der Ansprüche 11 und 12, dadurch gekennzeichnet, daß jede Steuervorrichtung (ARCB) das Senden nicht nur aufgrund lokaler Anfrage steuern kann, sondern auch als Übertragungsrelaisstation zwischen entfernten Geräten, und dadurch, daß wenigstens einige der künstlichen Mitteilungen benutzt werden, um Routing-Tabellen auszutauschen, die diese Übertragungsrelaisstationen definieren.

14. Anlage nach Anspruch 13, dadurch gekennzeichnet, daß jede Steuervorrichtung wenigstens eine Liste der Geräte unterhält, die sie empfangen kann, und diese als künstliche Mitteilung überträgt, was ihr umgekehrt ermöglicht, aufgrund der künstlichen Mitteilungen, die sie erhält, eine Liste derjenigen Geräte zu unterhalten, die sie empfangen können.

15. Anlage nach Anspruch 14, dadurch gekennzeichnet, daß jede Steuervorrichtung außerdem unterhält:

   - ein topographisches Verzeichnis, das wenigstens einen Teil der Geräte bezeichnet, mit denen sie kommunizieren kann, direkt oder indirekt, und das den Weg oder die Wege dieser Kommunikation definiert, und
   - eine Routing-Tabelle, die zu jedem Zeitpunkt einen bevorzugten Weg definiert.

16. Anlage nach einem der vorangehenden Ansprüche, dadurch gekennzeichnet, daß die Mitteilungen das Standardformat der ISO-Norm IEEE 802.3 haben, vergrößert um einen einleitenden Kopf.

17. Verfahren zur Übertragung von Daten, nach dem wenigstens zwei Verarbeitungsgeräte (Pa, Pb), jedes ausgestattet mit einer Netzschnittstelle (Ia, Ib), fähig sind, mit einem gemeinsamen Übertragungsmedium zusammenzuwirken, um auf Anfrage Mitteilungen zu senden und um empfangene Mitteilungen aufzunehmen sowie Sendung- oder Empfang-Bestätigungsbefehle zu erstellen, **dadurch gekennzeichnet**, daß in jedem Gerät das Senden/Empfangen der Daten auf einem sogenanten zentralen Funkkanal (RD) erfolgt, gesteuert gemäß der genannten Bestätigungsbefehle, und dadurch, daß als Reaktion auf eine Kollisionsdetektion auf dem Seitenkanal (R1) eine Sendung nach Kollision mit festgelegten Charakteristika durchgeführt wird, um ander Geräte über die Kollision zu informieren.

18. Verfahren nach Anspruch 17, dadurch gekennzeichnet, daß eine Kollision bei Empfang durch Verletzung eines festgelegten Kriteriums erkannt wird.

19. Verfahren nach einem der Ansprüche 17 bis 18, dadurch gekennzeichnet, daß wenigstens am Anfang eines Sendung-Bestätigungsbefehls in einem Gerät auf einem Seitenkanal (R1) ein schnell abwechselnder Sende-Empfangsbetrieb durchgeführt wird, nach einem eigens für diese Sende-Empfangsvorrichtung ausgewählten Muster, wobei eine Kollision erkannt wird, wenn ein Signal mit einem höheren Pegel als ein erster Schwellenwertpegel empfangen wird während eines wesentlichen Teils von wenigstens einer Pause dieses Seitenkanals, das die konkomittierende Sendung eines anderen Geräts auf dem Seitenkanal anzeigt.

20. Verfahren nach einem der Ansprüche 17 bis 19, dadurch gekennzeichnet, daß jedes Gerät, das auf seinem Hauptkanal demodulierbare Mitteilungen empfängt, auf einem zweiten Seitenkanal (R2) ein Besetzt-Signal sendet, wohingegen das Aussenden von Daten jedem Gerät verboten ist, dessen Funk-Sende-Empfangsvorrichtung auf ihrem zweiten Seitenkanal ein solches Besetzt-Signal empfängt.

21. Verfahren nach einem der Ansprüche 17 bis 20, dadurch gekennzeichnet, daß bei Fehlen von lokaler Sendungsanfrage und von Empfang jedes Gerät künstliche Mitteilungen (ARCC; ADF) sendet, um eine gegenseitig optimale Einstellung der Pilotfrequenzen der verschiedenen Geräte aufrechtzuerhalten.

22. Verfahren nach Anspruch 21, dadurch gekennzeichnet, daß wenigstens einige der künstlichen Mitteilungen für Dienstzwecken benutzt werden.

23. Verfahren nach Anspruch 17 bis 22, dadurch gekennzeichnet, daß jedes Gerät seine eigenen Mitteilungen senden oder denen anderer als Relaisstation dienen kann, in Abhängigkeit von Routing-Tabellen genannten Informationen, die diese Übertragungsrelaisstationen definieren.

24. Verfahren nach Anspruch 23, dadurch gekennzeichnet, daß jedes Gerät eine Liste der Geräte unterhält, die es empfangen kann, und diese als Mitteilung überträgt, was ihr umgekehrt ermöglicht, eine Liste derjenigen Geräte zu unterhalten, die sie empfangen können.

25. Verfahren nach Anspruch 24, dadurch gekennzeichnet, daß jedes Gerät außerdem unterhält:

- ein topographisches Verzeichnis, das wenigstens einen Teil der Geräte bezeichnet, mit denen es kommunizieren kann, direkt oder indirekt, und das den Weg oder die Wege dieser Kommunikation definiert, und
- eine Routing-Tabelle, die zu jedem Zeitpunkt einen bevorzugten Weg definiert.

**Claims**

1. Data transmission installation, of the type comprising at least two data processing stations (Pa, Pb), each provided with a network interface (Ia, Ib), which is capable of transmitting messages on request and of gathering messages received, as well as a transmission/reception management device (ARC) provided with a collision detector and a means of resolving a collision following a recognized collision condition, this management device issuing orders confirming transmission or reception, characterized in that each of the two stations includes a radio transceiver device, with a transceiver (RD) operating on a so-called central channel, for transmitting the messages to be exchanged, controlled in accordance with the said confirming orders, and an auxiliary transceiver (R1) operating on at least one side channel, possessing a normal state, and devised so as to modify its transmission/reception state in response to a detected collision.

2. Installation according to Claim 1, characterized in that the network interface is devised (RC) so as to recognize a collision in reception by violation of a predefined criterion.

3. Installation according to one of Claims 1 and 2, characterized in that the auxiliary transceiver is capable of fast transmission/reception switching, and in that, in response at least to the start of an order confirming transmission, the auxiliary transceiver (R1) is devised so as to operate in fast alternating transmission/reception mode, according to a pattern chosen so as to be specific to this transmission/ reception device, a collision being recognized by the collision detector if a signal of level greater than a first threshold level is received during a substantial part of at least one silence of this side channel, evincing concomitant transmission from another station on the side channel.

4. Installation according to Claim 3, characterized in that the pattern chosen is substantially random.

5. Installation according to one of Claims 1 to 4, characterized in that the collision detector (ARCA) is an automatic handler, possessing a first step, in which it can take a first so-called passive state and a second so-called active state, this automatic handler being placed in the active state upon an order confirming transmission, whilst it is otherwise in the passive state, in particular in response to the recognition of a start of message reception, in that in its active state the collision detector automatic handler controls the auxiliary transceiver in fast alternating transmission/reception mode according to a chosen pattern, whilst in its passive state, it can place this auxiliary transceiver in reception mode, and in that the collision detector automatic handler possesses a second step, in which it possesses a first state for transmission on collision and at least one other state for listening, whilst any collision recognized during the first step forces the second step to transmit on collision, so as to inform other stations of the collision, and that otherwise the automatic handler goes into listening mode.

6. Installation according to Claim 5, characterized in that the first side channel is split into two first side channels, of which one serves for the functions of the first step, and the other for the transmission on collision of the second step, which can be immediate.

7. Installation according to one of Claims 5 and 6, characterized in that the collision detector automatic handler (ARCA) possesses, in its second step, a second so-called active listening state and a third so-called passive listening state, one or other state being taken according to the previous state during the first step, the active listening step ensuring transmission intervention over the side channel, so as to accompany any transmission on collision, so that it exhibits predetermined characteristics.

8. Installation according to one of Claims 1 to 7, characterized in that each radio transceiver device is devised so as to operate on a second side channel (R2), on which it transmits an engaged signal so long as it is receiving a demodulable signal on its main channel, while the transmission of data is disabled for any station whose radio transceiver device is receiving the engaged signal on its second side channel.

9. Installation according to one of Claims 1 to 8, characterized in that, in the absence of sufficient natural traffic, the management device is able (ARCC; ADF) to force the transmission of artificial messages, so as to maintain a mutual tuning of the pilot frequencies of the various stations.

10. Installation according to Claim 9, characterized in that each management device is devised so as to carry out the said transmission of artificial messages in a substantially random manner.

11. Installation according to one of Claims 9 and 10, characterized in that some at least of the artificial messages are used for service purposes.

12. Installation according to Claim 11, characterized in that some at least of the artificial messages are used for exchanging information which is useful for understanding the messages.

13. Installation according to one of Claims 11 and 12, characterized in that each management device (ARCB) is able to instruct transmission not only upon a local request, but also in the guise of relay of transmission between distant stations, and in that some at least of the artificial messages are used for exchanging routeing tables defining these relays of transmission.

14. Installation according to Claim 13, characterized in that each management device keeps at least one list of the stations which it is receiving, and transmits it as an artificial message, thereby allowing it reciprocally to keep a list of the stations which are receiving it on the basis of the artificial messages which it receives.

15. Installation according to Claim 14, characterized in that each management device also keeps:

- a topological directory designating at least some of the stations with which it can communicate, directly or indirectly, and defining the pathway or pathways of this communication, and
- a routeing table defining a preferred pathway at any given moment.

16. Installation according to one of the preceding claims, characterized in that the messages are in the ISO standard format for the IEEE 802.3 standard, augmented with a preliminary header.

**17.** Data transmission method, according to which:

- there are at least two data processing stations (Pa, Pb), each provided with a network interface (Ia, Ib), which is capable of cooperating with a common transmission medium so as to transmit messages on request and to gather messages received, as well as of compiling orders confirming transmission or reception,

  characterized in that in each station the transmission/reception of the data is carried out on a so-called central radio channel (RD), controlled in accordance with the said confirming orders, and

  in that, in response to a collision detection, there is performed on a side channel (R1), a transmission upon collision, of predetermined characteristics, so as to inform other stations of the collision.

**18.** Method according to Claim 17, characterized in that a collision in reception is recognized by violation of a predefined criterion.

**19.** Method according to one of Claims 17 to 18, characterized in that, at least at the start of an order confirming transmission in a station, there is performed on a side channel (R1), a fast alternating transmission/reception, according to a chosen pattern specific to this station, a collision being recognized if a signal of level greater than a first threshold level is received during a substantial part of at least one silence of this side channel, evincing concomitant transmission from another station on the side channel.

**20.** Method according to one of Claims 17 to 19, characterized in that any station which receives demodulable messages on its main channel transmits an engaged signal on a second side channel (R2), while the transmission of data is disabled for any station whose radio transceiver device is receiving this engaged signal on its second side channel.

**21.** Method according to any one of Claims 17 to 20, characterized in that, in the absence of a request for local transmission and reception, every station transmits artificial messages (ARCC; ADF), so as to maintain a mutual tuning of the pilot frequencies of the various stations.

**22.** Method according to Claim 21, characterized in that some at least of the artificial messages are used for service purposes.

**23.** Method according to one of Claims 17 to 22, characterized in that each station can transmit its own messages or relay those of others, as a function of so-called routeing table information defining these relays of transmission.

**24.** Method according to Claim 23, characterized in that each station keeps a list of the stations which it is receiving, and transmits it as a message, thereby allowing it reciprocally to keep a list of the stations which are receiving it.

**25.** Method according to Claim 24, characterized in that each station also keeps:

- a topological directory designating at least some of the stations with which it can communicate, directly or indirectly, and defining the pathway or pathways of this communication, and
- a routeing table defining a preferred pathway at any given moment.

FIG. 1

FIG. 2

FIG. 3

FIG. 3A

| adresse du destinataire | adresse de la source | code | données |
| --- | --- | --- | --- |

FIG. 4A

| destinataire relai | source relai | code LARA | tampon | adresse du destinataire | adresse de la source | code | données |
| --- | --- | --- | --- | --- | --- | --- | --- |

FIG. 4B

| code point à point | nombre de sauts |
| --- | --- |

FIG. 4C

| code diffusion | nombre de relais | destinataire relai 1 | ... | destinataire relai n | numéro de diffusion | nombre de sauts |
| --- | --- | --- | --- | --- | --- | --- |

FIG. 4D

EP 0 634 069 B1

500 ─

Attendre le début d'une trans. mission ou d'une réception

Est. ce un début de transmission ?

OUI

recherche en mode actif de collision ( lors du début d'une transmission ) ─510

─520
collision=1
OUI    NON
(COLL11)

522

émission du signalement

écoute active ─530

540 ─
collision = 0 pas de collision active

collision = 1 collision active

collision=1
OUI    NON

541 ─

interrompre la transmission en insérant une séquence avec erreur

continuer la transmission

542 ─

─543

NON

─501

recherche en mode passif de collision ( lors du début d'une réception ) 550 ─

─560
collision=1
OUI    NON
(COLL12)

562 ─

émission du signalement

écoute passive 570 ─

580 ─
collision = 0 pas de collision active

collision = 1 collision active

585 ─
continuer la réception

rejeter la trame s'il y a une erreur

FIG. 5

FIG. 6

S11 — i=1 , collision = 0

S12 — le ième bit de $q_c$ → a

S13 — a = 0 ?

OUI

NON

S14 — Ecouter le canal latéral pendant un temps $L_c$

S15 — Emettre sur le canal latéral pendant un temps $L_c$

S16 — Une porteuse de gain > $e_c$ est détectée?

OUI

NON

S17 — Collision = 1
Collision 11

S18 — i = $N_c$ ?

NON

OUI

S19 — i=i+1

S20 — Signalement de collision

A1E1 R1E1 RC 610 S11 RC 60

SPA 9_c GA

A1R1 R1R1 RC 616 RC 611

RC 618 RC 619

COLL 11

## FIG. 6B

A1E2 R1E2 S21

RC 630 S22

A1R2 R1R2

RC635 RC645

RC639 COLL 21 COLL 22 FIG. 6C

RC 660 RC 649

COLL 2

S51 — collision = 0

S52 — chercher une erreur
dans la trame
arrivante pendant
une durée fixée

FIG.7

S53 — Si une erreur est détectée
faire collision =1 (COLL 12)

A1E

R1E RC625 S21

RC610 i RC60

S11

SPA g_c GA

A1R

R1R RC630 RC615 RC611

SPA

RC616

COLL 11

RC635 RC618 RC619

TR

COLL 21 RC639

FIG.6A

Recherche de porteuse pendant $J_C$ unités de temps — S71

Détection d'une porteuse à un gain > $E_C$ pendant $L_C$ (au moins)? — S72

OUI

Collision = 1 — S73

NON

FIG.8

Recherche de porteuse pendant au plus $J_C$ unités de temps — S31

Détection d'une porteuse à un gain $E_C$ pendant $L_C$ (au moins) — S32

OUI

S33 — Collision = 1

NON

émission de signalement de collision pendant $J_C$ unités de temps (au moins)

S34 —

FIG.9

FIG.10

FIG.11 A

FIG. 11 B

700

Attendre TA

702

Trame
en attente de
retransmission ?

OUI NON

tirer g(t) 704

OUI g(t) < p(t) NON

706

708

Emission d'une trame ADF

**FIG.12**

lire la tranche canal 800

802

tranche collision
détectée ?

NON OUI

804 806

$p(t) = \min \{F_m, \beta p(t)\}$ $p(t) = \max \{f_m, \alpha p(t)\}$

**FIG.13**